# EUROPÄISCHE PATENTSCHRIFT

(11) **EP 2 713 166 B1**
(45) Veröffentlichungstag und Bekanntmachung des Hinweises auf die Patenterteilung: **22.05.2019**
(21) Anmeldenummer: 12006836.6
(22) Anmeldetag: 01.10.2012
(51) Int. Cl.: G05B 19/02, G01N 35/00

(54) **Laborautomat und Verfahren zur automatischen Behandlung von Laborproben**
Laboratory device and method for the automatically treatment of laboratory samples
Automate de laboratoire et procédé de traitement automatique d'échantillons de laboratoire

(43) Veröffentlichungstag der Anmeldung: 02.04.2014
(73) Patentinhaber: EPPENDORF AG, 22339 Hamburg (DE)
(72) Erfinder: Thieme, Andreas, 22395 Hamburg (DE); Huesmann, Claas, 28201 Bremen (DE); Roth, Stefan, 22395 Hamburg (DE); Lucke, Judith, 22765 Hamburg (DE); Pohl, Harald, 21075 Hamburg (DE)
(74) Vertreter: Ricker, Mathias

(56) Entgegenhaltungen:
- US-A1- 2004 158 433
- US-A1- 2007 184 546
- US-A1- 2010 105 074
- US-A1- 2011 160 909
- US-A1- 2012 004 742

## Beschreibung

Die Erfindung bezieht sich auf einen Laborautomaten und ein Verfahren zur automatischen Behandlung von Laborproben.

Solche Laborautomaten werden verwendet, um in chemischen, biologischen, biochemischen, medizinischen oder forensischen Laboratorien Proben, insbesondere flüssige Proben mit hoher Effizienz zu bearbeiten. Laborautomaten automatisieren Behandlungsschritte, die sonst manuell durchgeführt werden müssten, und steigern auf diese Weise die Geschwindigkeit, Präzision und Zuverlässigkeit dieser Behandlungen.

Eine Behandlung einer flüssigen Laborprobe kann darauf gerichtet sein, diese Probe physikalisch, chemisch, biochemisch oder auf andere Weise in ihrer Zusammensetzung zu ändern. Durch eine Behandlung der Probe kann eine Probe z.B. geteilt oder verdünnt werden. Die Inhaltsstoffe einer Probe können analysiert werden oder es können, z.B. durch eine chemische Reaktion, neue Inhaltsstoffe hergestellt werden, insbesondere unter Verwendung der Probe. Insbesondere im Zusammenhang mit der Bearbeitung und Analyse von DNA oder RNA oder deren Bestandteilen sind Laborautomaten hilfreich, um eine Fülle von Informationen innerhalb einer geeigneten Zeitspanne zu gewinnen oder viele solcher Proben zu analysieren.

Laborautomaten weisen meist eine Arbeitsfläche mit Arbeitsstationen auf, an denen Proben in verschiedener Weise bearbeitet oder gelagert werden können. Für den Transport von z.B. flüssigen Proben zwischen verschiedenen Positionen, insbesondere Probenbehältern, dient meist eine programmgesteuerte Bewegungsvorrichtung in Verbindung mit einer Fluid-Transfer-Einrichtung, die z.B. ein Pipettiersystem aufweisen kann. Sowohl der Transport der Proben als auch deren Behandlung an den verschiedenen Stationen lässt sich programmgesteuert automatisieren.

Die Programmierung von bekannten Laborautomaten wurde oft als unkomfortabel und wenig anwenderfreundlich beschrieben. Mitunter mussten vom Anwender eigens Programmierkenntnisse erworben werden, um die gerätespezifische Programmierung durchführen zu können. Dabei besteht bei bekannten Laborautomaten das Problem, dass die Eingabe eines Steuerungsprogramms in der Regel unstrukturiert erfolgt, indem das Programm als ganzes in einem Editor angefertigt wird. Der Programmierer muss sich nicht nur um die richtige Wahl von Programmparametern und Umrechnungsformeln kümmern, sondern muss sich gleichzeitig um eine fehlerfreie Programmlogik und richtige Synthax der Programmiersprache bemühen. Einige Laborautomaten am Markt bieten inzwischen Eingabesysteme an, bei denen eine festgelegte Anzahl von Programmparametern in einer dedizierten Weise über Displays und Eingabemöglichkeiten am Laborgerät erfasst werden. Oftmals sind diese Eingabeprogramme darauf beschränkt, mit herstellerspezifischen Zubehörkits verwendet zu werden und sind deshalb zur Durchführung der Vielzahl der vom Benutzer gewünschten Anwendungen umständlich und unflexibel.

US2011/0160909 beschreibt so einen Laborautomaten welcher Eingabeparameter abfragt, die Software zur Durchführung der Anwendung entweder vorgegeben ist oder nur unter Kenntnis einer Programmiersprache geändert werden kann.

Aufgabe der vorliegenden Erfindung ist es, einen Laborautomaten und ein Verfahren zur automatischen Behandlung von Laborproben bereitzustellen, die einfach und flexibel zu bedienen sind.

Die Erfindung löst diese Aufgabe insbesondere durch den Laborautomaten gemäß Anspruch 1 und das Verfahren nach Anspruch 11. Bevorzugte Ausgestaltungen sind insbesondere Gegenstände der Unteransprüche.

Der erfindungsgemäße Laborautomat zur programmgesteuerten Behandlung von mindestens einer Laborprobe ist durch den unabhängigen Anspruch 1 definiert.

Der erfindungsgemäße Laborautomaten bietet den Vorteil, dass die Eingabe der Programmparameter in einer strukturierten Weise erfolgt, indem in einem ersten Displaybereich mittels eines oder mehrerer Abfragebereiche die Eingabe stattfindet, und in einem zweiten Displaybereich das Resultat dieser Eingabe, inklusive der Beschreibung der zugehörigen Programmparameter, dem Benutzer stets angezeigt wird. Dadurch erhält der Benutzer zu jedem Zeitpunkt der Festlegung der Programmparameter einen Überblick über die bereits eingegebenen Daten.

Wenn das Display ein Touch-Screen-Display ist, kann die Bedienung des Laborautomaten besonders intuitiv und komfortabel erfolgen. Ein Touch-Screen-Display ist ferner wartungsarm, insbesondere leichter zu reinigen, zu dekontaminieren oder sterilisieren als herkömmliche Bedienelemente, insbesondere solche, die mechanisch bewegliche Teile aufweisen. Ein Touch-Screen-Display kann chemikalienresistent ausgebildet sein, was in bestimmten Laborumgebungen sehr vorteilhaft ist. Das Display kann aber auch nicht zur Eingabe vorgesehen sein und auf die Anzeigefunktion beschränkt sein. Die Eingabe erfolgt dann z.B. über ein Zeigegerät, z.B. ein Bedienelement der Benutzerschnittstelleneinrichtung, das ein Zeigeobjekt am Display bewegt, nach Art eines Mauszeiger, mit dem eine Eingabe oder Auswahl vorgenommen werden kann. Die Benutzerschnittstelleneinrichtung kann auch eine Tastatur aufweisen.

Das Display ist vorzugsweise in der Lage, einen im Wesentlichen rechteck-förmigen Displaybereich anzuzeigen, wie bei solchen Displays üblich. Vorzugsweise ist der erste Displaybereich im Wesentlichen rechteck-förmig. Vorzugsweise ist der zweite Displaybereich im Wesentlichen rechteck-förmig. Weitere Displaybereiche können vorgesehen sein, z.B. eine Titelleisten und/oder eine Bodenleiste, und/oder eine Randleiste und/oder eine Navigationsleiste. Vorzugsweise werden der erste und zweite Displaybereich horizontal nebeneinander dargestellt. Dies ist besonders bei einem Bildschirmverhältnis vorteilhaft, bei dem die horizontale Länge der Displaygröße ("Displaybreite B") größer ist als die vertikale Länge der Displaygröße ("Displayhöhe H"). Auf diese Weise lassen sich im ersten Displaybereich die Abfragebereiche mit Informationen und Eingabefeldern und zweiten Displaybereich die Informationen besonders übersichtlich untereinander darstellen, was bevorzugt ist. Die Steuerung des Laborautomaten erfolgt so noch intuitiver und komfortabler. Es ist auch möglich und bevorzugt, dass der erste und zweite Displaybereich vertikal untereinander dargestellt sind. Dies kann insbesondere dann zutreffen, wenn H>B. Das Scrollen einer im ersten Displaybereich dargestellten Liste kann, insbesondere falls H>B, auch in horizontaler Richtung erfolgen.

Vorzugsweise ist die Höhe H1 des ersten Displaybereichs im Wesentlichen gleich der Höhe H2 des zweiten Displaybereichs. Dadurch lässt sich insbesondere die verfügbare Displayhöhe H optimal nutzen. Die Steuerung des Laborautomaten erfolgt so noch intuitiver und komfortabler. Es ist auch möglich, dass H1 ungleich H2.

Vorzugsweise ist die Breite B1 des ersten Displaybereichs im Wesentlichen größer als die Breite B2 des zweiten Displaybereichs, insbesondere wenn der erste und zweite Displaybereich horizontal nebeneinander angezeigt werden. Dadurch lassen sich die Programmparameter im ersten Displaybereich in komfortabler Weise abfragen, während die Darstellung im zweiten Displaybereich kompakt und übersichtlich gehalten werden kann, was dem Ziel der Darstellung der bereits eingegebenen Parameter im zweiten Displaybereich entspricht. Die Steuerung des Laborautomaten erfolgt so noch intuitiver und komfortabler.

Ein Informationsbereich und/oder der Abfragebereich können jeweils vorzugsweise im Wesentlichen rechteckförmig sein, oder kreisförmig, oder anders geformt sein, insbesondere eine Teilausschnitt des ersten bzw. zweiten Displaybereichs sein. Ein Informationsbereich dient dazu, dem Benutzer eine Information anzuzeigen, z.B. die Beschreibung eines abzufragenden Programmparameters. Ein Eingabebereich dient dazu, dass der Benutzer, insbesondere durch Auswahl des Eingabebereichs und/oder Eingabe in diesem Eingabebereich, eine Eingabe vornimmt, die dann vom Laborautomaten verarbeitet wird, insbesondere daraus einen Programmparameter ableitet oder die Eingabe unmittelbar als Programmparameter verwendet, und insbesondere gespeichert wird. Der Eingabebereich kann die Auswahl aus einer Sammlung von Werten und/oder Angaben, insbesondere als Liste, vorsehen, insbesondere aus einer "Pop-up"-Liste, und/oder die Eingabe eines Textes, insbesondere eines Wertes.

Die Anzeige des ersten und zweiten Displaybereichs erfolgt insbesondere dann, wenn zumindest einer, mehrere oder alle der benutzerseitig erforderlichen Parameter abgefragt werden. Diese Anzeige erfolgt somit zumindest zeitweilig während des Betriebs des Laborautomaten. Es ist auch möglich, dass mindestens ein benutzerseitig erforderlicher Parameter abgefragt wird, wenn im Display nicht der erste und/oder der zweite Displaybereich angezeigt wird. Der erste und zweite Displaybereich können jeweils auch für einen anderen Zweck genutzt werden, als den in Schritt a) und b) beschriebenen Schritten.

Darüber hinaus ist der Laborautomat vorzugsweise so ausgebildet, dass die Steuerung der Behandlung der mindestens einen Laborprobe automatisch unter Verwendung der erfassten Programmparameter erfolgen kann. Der Laborautomat, insbesondere dessen Steuerungsprogramm ist vorzugsweise so ausgebildet, dass die vom Benutzer vorgenommenen Eingaben, insbesondere der mindestens eine Wert mindestens eines Programmparameters, dazu verwendet werden, um gegebenenfalls weitere erforderliche Programmparameter automatisch zu ermitteln, insbesondere durch Berechnung oder durch Vergleich mit Daten in einer Datenbank des Laborautomaten. Insbesondere werden vorzugsweise die zur Durchführung der Behandlung im einzelnen vorzugsweise zu verwendenden Steuerparameter automatisch bestimmt. Durch diese Maßnahmen wird die Bedienung des Laborautomaten komfortabel, der Benutzer erspart sich insbesondere das Entwerfen eines Programmcodes, da diese Schritte insbesondere automatisch vom Laborautomaten durchgeführt werden. In einer bevorzugten Ausgestaltung der Erfindung werden vom Benutzer nur die Eingaben abgefordert, die direkt mit der durchzuführenden Behandlung der Proben zu tun haben. Das sind häufig dieselben Angaben, die auch für eine manuelle Durchführung der Behandlung notwendig wären und dem Benutzer geläufig sind. Dagegen müssen solche Parameter, die die Steuerung des Laborautomaten betreffen, insbesondere die Steuerparameter, nicht im einzelnen festgelegt werden, da diese vorzugsweise automatisch festgelegt werden. Steuerparameter sind die zur Steuerung der technischen Bestandteile der Behandlungseinrichtung im Einzelnen erforderlichen Parameter. Steuerparameter können Programmparameter sein oder können daraus für die technische Umsetzung abgeleitete Parameter sein, insbesondere automatisch bestimmte Parameter sein.

Unter einer programmgesteuerten Behandlung einer Probe ist zu verstehen, dass der Vorgang der Behandlung im Wesentlichen automatisch gesteuert wird, und zwar entsprechend den Vorgaben eines Computerprogramms. Insbesondere ist bei einer programmgesteuerten Behandlung zumindest nach Erfassung der benutzerseitig erforderlichen Programmparameter im Wesentlichen keine Benutzertätigkeit erforderlich.

Unter einem Programmparameter wir eine Variable verstanden, über die ein Computerprogramm oder Unterprogramm, für einen Aufruf gültig, auf bestimmte Werte "eingestellt" werden kann. Diese Einstellungen werden bei der Verarbeitung berücksichtigt und beeinflussen damit meist auch die Ergebnisse des Programms. Ein Programmparameter kann ein benutzerseitig erforderlicher Programmparameter sein, also ein programmextern gesetzter Einflussfaktor. Ein benutzerseitig erforderlicher Programmparameter zeichnet sich dadurch aus, dass er für die Ausführung einer Behandlung, insbesondere zur Ausführung eines Methodenprogramms, erforderlich ist. Andere Programmparameter, die nicht benutzerseitig erforderlich sind, können aus den benutzerseitig erforderlichen Programmparametern abgeleitet werden oder anderweitig verfügbar gemacht werden.

Als Anweisung wird in üblicher Weise ein zentrales Element einer Programmiersprache bezeichnet. Die Programme derartiger Sprachen setzen sich primär aus einer oder mehreren Anweisungen zusammen. Eine Anweisung stellt eine in der Syntax einer Programmiersprache formulierte einzelne Vorschrift dar, die im Rahmen der Abarbeitung des Programms auszuführen ist. Wie eine Anweisung syntaktisch auszusehen hat, wird durch die jeweilige Programmiersprache bzw. deren Spezifikation festgelegt. In der maschinennahen Programmierung werden Anweisungen häufig auch als Befehl bezeichnet. Anweisungen sind üblicherweise Zuweisungen, Kontrollanweisungen (wie Sprünge, Schleifen und bedingte Anweisungen) und Prozeduraufrufe. Abhängig von der Programmiersprache sind teilweise auch Zusicherungen, Deklarationen, Klassen- und Funktionsdefinitionen Anweisungen. Die Anweisungen des Steuerprogramms können so in übliche Weise ausgestaltet sein.

Unter einem Programmmodul wird in üblicher Weise eine abgeschlossene funktionale Einheit einer Software verstanden, bestehend aus einer Folge von Verarbeitungsschritten und Datenstrukturen. Dabei können insbesondere folgende Definitionen zutreffen: Der Inhalt eines Moduls ist häufig eine wiederkehrende Berechnung oder Bearbeitung von Daten, die mehrfach durchgeführt werden muss. Module bieten eine Kapselung durch die Trennung von Schnittstelle und Implementierung: Die Schnittstelle eines Moduls definiert die Datenelemente, die als Eingabe und Ergebnis der Verarbeitung durch das Modul benötigt werden. Die Implementierung enthält den tatsächlichen Programmcode. Ein Modul wird zum Beispiel als Funktion oder Unterprogramm aufgerufen, führt eine Reihe von Verarbeitungsschritten durch und liefert als Ergebnis Daten zurück an das aufrufende Programm. Ein Modul kann selbst weitere Module aufrufen - so ist eine Hierarchie von Programmaufrufen möglich. Die in Modulen festgelegten Datenstrukturen und Methoden können gegebenenfalls vererbt und von anderen Modulen geerbt werden. Module sind daher ein wesentliches Element in der strukturierten und objektorientierten Programmierung.

Unter einem Steuerprogramm wird ein ausführbares Computerprogramm verstanden, das die gewünschte automatische Behandlung mindestens einer Probe in Abhängigkeit von den Programmparametern bewirkt, insbesondere den benutzerseitig erforderlichen Programmparametern und den weiteren Programmparametern, und insbesondere in Abhängigkeit von auf Basis der Programmparameter erzeugten Steuerparameter. Die Steuereinrichtung steuert die Behandlungseinrichtung in Abhängigkeit von den Programmparametern, insbesondere den benutzerseitig erforderlichen Programmparametern und den weiteren Programmparametern, und insbesondere in Abhängigkeit von auf Basis der Programmparameter erzeugten Steuerparametern.

Unter einem Methodenprogramm wird ein Steuerprogramm verstanden, das den konkreten Ablauf einer Behandlung gemäß einer vorbestimmten Behandlungsart und gemäß einer benutzerseitig festgelegten Weise bestimmt.

Vorzugsweise kann der Benutzer die Art der Behandlung der Probe festlegen. Eine solche Behandlungsart kann insbesondere dienen:
der Nukleinsäureaufreinigung, insbesondere
   - "MagSep Blood gDNA": Aufreinigung von genomischer DNA aus Vollblut, insbesondere unter Verwendung des Eppendorf ® MagSep Blood gDNA Kits;
   - "MagSep Tissue gDNA": Aufreinigung von genomischer DNA aus lebendem Gewebe, insbesondere unter Verwendung des Eppendorf ® MagSep Tissue gDNA Kits;
   - "MagSep Viral DANN/RNA": Aufreinigung von viraler RNA oder DNA aus zellfreien Körperflüssigkeiten, insbesondere unter Verwendung des Eppendorf ® MagSep Viral DNA/RNA Kits;
und PCR-Anwendungen, insbesondere
   - "Compose Mastermix";
   - "Normalize Concentrations";
   - "Create Dilution Series";
   - "Setup Reactions".

Vorzugsweise wählt der Laborautomat ausgehend von der vom Benutzer gewählten Behandlungsart automatisch den passenden Satz von Programmparametern aus, dessen benutzerseitig erforderliche Programmparameter dann in den Schritten (b) und (c) vom Benutzer abgefragt wird. Der Programmparametersatz kann einerseits die benutzerseitig erforderlichen Programmparameter enthalten, und kann andererseits weitere Programmparameter enthalten. Diese weiteren Programmparameter können in Abhängigkeit von der gewählten Behandlungsart automatisch festgelegt werden, oder können in Abhängigkeit von mindestens einem, oder allen, vom Benutzer eingegebenen Programmparametern automatisch festgelegt werden, und/oder können in der Speichereinrichtung gespeichert sein. Die gespeicherten Pararametersätze sind -oder werden vom Laborautomaten- vorzugsweise für die Behandlungsart optimiert, so dass der Benutzer vorzugsweise kein Spezialwissen zur Optimierung der Parameter benötigt. Aus dem Programmparametersatz werden die Steuerparameter abgeleitet, die zur Durchführung der konkreten Behandlung mittels der Behandlungseinrichtung notwendig sind.

Für eine Behandlungsart ist vorzugsweise ein Programmparametersatz von für diese Behandlungsart spezifischen Programmparametern definiert. Die Programmparameter dieses Programmparametersatzes können insbesondere die für die Behandlung zu verwendenden Zubehörteile, z.B. Probenbehältnis, Transportbehältnis, und/oder die zu verwendenden Tools, und/oder weiteres Verbrauchsmaterial definieren.

Die Zuordnung von Programmparametersatz und Behandlungsart ist in der Speichereinrichtung des Laborautomaten gespeichert. Vorzugsweise ist der Laborautomat dazu ausgebildet, dass der Benutzer weiterer solcher Zuordnungen im Laborautomat speichern und/oder verwenden kann. Durch diese Zuordnung, in Kombination mit der übersichtlichen und gut strukturierten Abfrage der Programmparameter wird die Bedienung de Laborautomaten besonders effizient. Diese Zuordnung erfolgt vorzugsweise durch die Verwendung eines oder mehrere Programmmodule, wobei jeweils ein Programmmodul auf eine bestimmte Anwendung zugeschnitten ist:
Vorzugsweise weist der Laborautomat mindestens ein Programmmodul auf, wobei ein vorbestimmtes Programmmodul der Steuerung einer vorbestimmten Laboraufgabe zur Behandlung von Laborproben dient,
- wobei die Behandlung unter Verwendung eines ausgewählten Programmmoduls gesteuert wird, dem die mehreren Programmparameter zugeordnet sind, die zumindest teilweise vom Benutzer gewählt werden,
- wobei die mindestens eine Prozessoreinrichtung insbesondere zur Ausführung mindestens eines Programmmoduls dient und wobei die mindestens eine Speichereinrichtung zum Speichern von dem mindestens einem Programmmodul dient,
- wobei das mindestens eine Steuerprogramm Anweisungen enthält, um die Schritte (a), (b), (c) und (d) in Abhängigkeit von dem ausgewählten Programmmodul auszuführen, wobei die in Schritt (b) abzufragenden Programmparameter dem ausgewählten Programmmodul zugeordnet sind.

Besonders vorteilhaft ist es, wenn das Programmmodul vom Laborautomaten dazu verwendet wird, um eine vom Benutzer festgelegte Methode zu erzeugen. Ein Programmmodul fragt dabei die benutzerseitig erforderlichen Programmparameter des entsprechenden Parametersatzes ab, der dem Programmmodul und der Behandlungsart zugeordnet sind und der Benutzer gibt die entsprechenden Werte ein. Das Steuerprogramm erzeugt dann insbesondere unter Verwendung des Programmmoduls und der diesem zugeordneten Programmparameter bzw. deren Werte den eigentlichen, vom Benutzer indirekt gestalteten Steuerungscode zur Steuerung der Behandlung mittels der Steuerparameter, der auch als Methodenprogramm bezeichnet wird:
Vorzugsweise ist von dem Laborautomaten unter Verwendung eines Programmmoduls und der mehreren Programmparameter, die zumindest teilweise vom Benutzer gewählt werden, mindestens ein Methodenprogramm automatisch erzeugbar, das der Steuerung einer vorbestimmten Laboraufgabe zur Behandlung von Laborproben dient,
- wobei die mindestens eine Prozessoreinrichtung insbesondere zur Ausführung mindestens eines Methodenprogramms dient und wobei die mindestens eine Speichereinrichtung zum Speichern mindestens eines Methodenprogramm dient,
- wobei die in Schritt (b) abzufragenden Programmparameter dem unter Verwendung des ausgewählten Programmmoduls erzeugten Methodenprogramm zugeordnet sind,
- wobei das mindestens eine Steuerprogramm Anweisungen enthält, um den Schritt (c2) in Abhängigkeit von dem ausgewählten Programmmodul auszuführen:
   (c2) Erzeugen des Methodenprogramms gemäß diesem Programmmodul in Abhängigkeit von den erforderlichen Programmparametern,
- wobei in Schritt (d) die Durchführung der Behandlung erfolgt, indem das Methodenprogramm ausgeführt wird.

Vorzugsweise ist das Steuerprogramm dazu ausgebildet ist, das gewünschte Programmmodul vom Benutzer über die Benutzerschnittstelle aus der Anzahl NP>=1 von vorbestimmten Programmmodulen auswählen zu lassen, wobei das dem Programmmodul zugeordnete Methodenprogramm jeweils in der Speichereinrichtung gespeichert ist oder speicherbar ist. Ein Methodenprogramm kann also auch außerhalb des Laborautomaten erzeugt werden und dann zum Laborautomaten übertragen werden. Das Methodenprogramm kann alternativ zur direkten Ausführung zunächst gespeichert werden und vom Benutzer geändert/ergänzt und/oder zu einem späteren Zeitpunkt ausgeführt werden.

Vorzugsweise werden in Schritt (a) mehrere Abfragebereiche angezeigt werden, um mehrere Programmparameter abzufragen.

Vorzugsweise erfolgt in Schritt (a) das Abfragen der Programmparameter in Form einer Abfragesequenz mit hintereinander angeordneten Abfragebereichen, insbesondere in Form einer Liste, bei der mehrere Abfragebereichen vorgesehen sind, und wobei zumindest ein Abschnitt der Abfragesequenz oder der Liste in dem ersten Displaybereich angezeigt wird. Eine solche Dateneingabe ist besonders übersichtlich.

Vorzugsweise ist die Abfragesequenz oder die Liste so ausgebildet, dass ein Abfragebereich, dessen Eingabebereich ein Benutzer berührt hat, gegenüber den anderen Abfragebereichen in einer ersten Art optisch hervorgehoben angezeigt ist. Dieser Abfragebereich kann z.B. heller dargestellt sein als die anderen Abfragebereiche oder andersfarbig. Dadurch wird die Benutzung des Laborautomaten noch komfortabler.

Vorzugsweise ist die Abfragesequenz oder die Liste so ausgebildet, dass ein Abfragebereich, in dem vom Benutzer noch keine Eingabe eines Wertes eines Programmparameters vorgenommen wurde, gegenüber den anderen Abfragebereichen in einer zweiten Art optisch hervorgehoben angezeigt ist, z.B. andersfarbig. Dadurch wird die Benutzung des Laborautomaten noch komfortabler.

Vorzugsweise ist die Abfragesequenz oder die Liste so ausgebildet, dass ein Abfragebereich, in dem vom Benutzer bereits alle Eingaben mindestens eines Wertes mindestens eines Programmparameters vom Benutzer vorgenommen wurden, gegenüber den anderen Abfragebereichen in einer dritten Art optisch hervorgehoben angezeigt ist, z.B. andersfarbig. Dadurch wird die Benutzung des Laborautomaten noch komfortabler.

Vorzugsweise ist der Laborautomat und/oder dessen Steuerungsprogramm so ausgebildet, dass die Liste vom Benutzer, insbesondere durch Berühren des ersten Displaybereichs, verschoben werden kann, insbesondere durch eine Geste gescrollt werden kann, um einen anderen Abschnitt der Liste im ersten Displaybereich anzuzeigen.

Vorzugsweise werden in Schritt (b) die erforderlichen Programmparameter über eine Anzahl N_{T} von Abfragebereichen ermittelt. Vorzugsweise ist jedem Abfragebereich eine Abfragenummer N zwischen, jeweils einschließlich, 1 und N_{T} zugeordnet, wobei diese Abfragenummer in oder neben dem Abfragebereich angezeigt wird. Dadurch wird die Benutzung des Laborautomaten noch komfortabler.

Vorzugsweise werden in Schritt (c) die vom Benutzer eingegebenen Werte der Programmparameter mit einer Information über diesen Programmparameter angezeigt, insbesondere als automatisch erzeugte Textdarstellung und/oder Bilddarstellung, bezeichnet als "Scratch-Liste". Das erhöht die Übersicht und die Benutzung des Laborautomaten wird noch komfortabler. Vorzugsweise werden, nach Abfragen aller Programmparameter, in dieser Scratch-Liste alle vom Benutzer angegebenen Programmparameter angezeigt, vorzugsweise weitere Programmparameter, jeweils vorzugsweise mit Beschreibung, und insbesondere die "Default"-Werte dieser Programmparameter.

Vorzugsweise wird in der Scratch-Liste für den mindestens einen vom Benutzer eingegebenen Wert für einen Programmparameter die entsprechende Abfragenummer N angezeigt. Das erhöht die Übersicht und die Benutzung des Laborautomaten wird noch komfortabler.

Vorzugsweise ist der mindestens eine Programmparameter, insbesondere der benutzerseitig erforderliche Programmparameter, aus der folgenden Menge von physikalischen Größen ausgewählt, die zur Behandlung einer Laborprobe mittels der Behandlungseinrichtung relevant sind: Probenanzahl, Verdünnungsfaktor, Zielvolumen, Position der Proben in einem Probengefäßhalter oder in einer Microtiterplatte, Probentemperatur, Zeitpunkte und/oder Zeitdifferenzen, Temperaturen oder Temperaturdifferenzen, Änderungsraten solcher Parameter, etc.

Vorzugsweise enthält das Steuerprogramm ferner Anweisungen, um folgenden Schritt auszuführen:
Erzeugen eines Methodenprogramms unter Verwendung der vom Benutzer eingegebenen Programmparameter, und Speichern des Methodenprogramms in der Speichereinrichtung, wobei das Methodenprogramm vom Benutzer editierbar ist. Dadurch wird die Verwendung des Laborautomaten noch flexibler.

Die Erfindung betrifft auch ein Verfahren zur programmgesteuerten Behandlung von mindestens einer Laborprobe mittels eines Laborautomaten gemäß Anspruch 1 durch ein Steuerprogramm des Laborautomaten.

Weitere Merkmale des erfindungsgemäßen Verfahrens zur programmgesteuerten Behandlung von mindestens einer Laborprobe ergeben sich aus der Beschreibung des erfindungsgemäßen Laborautomaten.

Die Erfindung betrifft ferner die Verwendung des erfindungsgemäßen Laborautomaten oder des erfindungsgemäßen Verfahrens zur Durchführung einer Laboraufgabe zur Behandlung von Laborproben, wobei diese Laboraufgabe insbesondere aus der Gruppe der in Anspruch 12 aufgelisteten Aufgaben gewählt ist.

Der Laborautomat kann so verändert werden, dass damit weitere Behandlungsarten durchgeführt werden können. Dies kann dadurch geschehen, dass die dafür notwendigen Dateien und/oder Programme oder Programmbestandteile, insbesondere ein der - Behandlungsart zugeordnetes Programmmodul, nachträglich in den Laborautomaten, insbesondere dessen Speichereinrichtung, übertragen werden.

Eine Laborprobe ist eine Probe, die in einem Labor behandelt werden kann. Anstelle des Begriffs Laborprobe wird bei der Beschreibung der Erfindung auch der Begriff "Probe" verwendet. Die Probe kann ein Fluid sein. Die Probe kann flüssig, gelartig, pulverförmig oder ein Festkörper sein, oder solche Phasen aufweisen. Die Probe kann ein Gemisch aus solchen Phasen sein, insbesondere ein Flüssigkeitsgemisch, eine Lösung, eine Suspension, z.B. eine Zellsuspension, eine Emulsion oder Dispersion. Eine Lösung ist ein homogenes Gemisch aus mindestens zwei Stoffen. Eine flüssige Probe kann eine solche sein, die üblicherweise in einem biologischen, chemischen, medizinischen Labor gehandhabt wird. Eine flüssige Probe kann eine Analysenprobe sein, ein Reagenz, ein Medium, ein Puffer etc. Eine Lösung weist einen oder mehrere gelöste feste, flüssige oder gasförmige Stoffe (Solute) auf, und weist ferner ein vorzugsweise flüssiges Lösungsmittel (Solvens) auf, das insbesondere den größeren Anteil oder größten Anteil des Volumens auf, das die Lösung bildet. Das Lösungsmittel kann selbst eine Lösung sein.

Die Behandlung einer Laborprobe(n) kann einen oder mehrere der nachfolgend genannten Vorgänge, insbesondere gleichzeitig oder nacheinander, beinhalten:
- Transport der Laborprobe, insbesondere durch eine Transporteinrichtung, unter Wirkung der Gravitation und/oder einer durch den Laborautomaten bewirkten Kraft;
- berührungslose (nicht-invasive) physikalische Behandlung der Probe, insbesondere thermische Behandlung, insbesondere Erwärmen und/oder Kühlen, insbesondere geregeltes Temperieren der Probe; oder Gefrieren oder Auftauen der Probe, oder sonstiges thermisches Herbeiführen einer Phasenänderung der Probe, z.B. Verdampfen, Kondensieren etc; magnetische Behandlung der Probe; optische Behandlung der Probe, insbesondere Bestrahlen der Probe mit Strahlung, insbesondere Licht, insbesondere sichtbare Licht. Infrarotlicht oder UV-Licht, oder Detektion von solcher Strahlung, insbesondere Fluoreszenzlicht, aus dieser Probe; magnetische Behandlung einer Probe mit magnetischen Bestandteilen, insbesondere magnetische Separation von magnetischen Bestandteilen, insbesondere "magnetic beads", von einer fluiden Phase der Probe; Bewegen der Probe, also Durchführen einer mechanischen Behandlung der Probe, insbesondere Schütteln, rotieren, oszillieren, vibrieren, zentrifugieren, akustische Behandlung, insbesondere mit Ultraschall, jeweils z.B. zum Zwecke des Mischens der Probe oder des Separierens von Bestandteilen innerhalb der Probe oder zum Transportieren der magnetischen Bestanteile aus der Probe heraus oder in die Probe hinein;
- invasive physikalische Behandlung der Probe, also Durchführen einer mechanischen Behandlung der Probe: Einbringen von Rührwerkzeug, z.B. Rührstab oder magnetischer Rührfisch in die Probe und Rühren, Einbringen einer Sonode für akustische oder Ultraschalbehandlung, Einbringen von Transportmitteln, insbesondere Transportbehältnissen in die Probe, z.B. Dispenserspitze oder Pipettenspitze, oder Hohlnadel oder Schlauch; Zugabe von anderen Hilfsmitteln in die Probe;
- chemische, biochemische oder biomedizinische Behandlung der Probe: Zugabe von chemischen (z.B. Reaktant, Reagenz, Solvens, Solut) biochemischen (z.B. biochemische Makromoleküle, z.B. DNA, DNA-Bestandteile; pharmazeutische Wirkstoffe), oder biomedizinischen (Blut, Serum, Zellmedium) Stoffen;
- Lagerung der Probe, insbesondere für einen programmgesteuert definierten Zeitraum, insbesondere unter bestimmten physikalische Bedingungen, z.B. bei bestimmter Temperatur, Temperaturen, oder Temperaturwechseln, insbesondere wiederholten Temperaturwechseln, z.B. zyklisch und/oder periodisch wiederholten Temperaturwechseln, und/oder Einstellen eines Umgebungsdruck, z.B. Anlegen eines Überdrucks oder eines Unterdrucks, insbesondere eines Vakuums, und/oder Einstellen einer definierten Umgebungsatmosphäre, z.B. ein Schutzgas oder eine bestimmte Luftfeuchtigkeit, unter bestimmten Strahlungsbedingungen, z.B. abgeschirmt gegen sichtbares Licht, im Dunkeln, oder unter definierter Bestrahlung;
- Messung oder Analyse der Probe, insbesondere Analyse durch eine nicht-invasive und/oder invasive Behandlung der Probe, insbesondere um mindestens eine oder mehrere chemische, physikalische, biochemische und/oder medizinische Eigenschaften der Probe zu messen; insbesondere Zählen von Zellen mittels Cell-Counter;
- Bearbeitung der Probe, insbesondere Änderungen mindestens einer Eigenschaft der Probe, insbesondere mittels nicht-invasiver und/oder invasiver Behandlung der Probe.

Diese Behandlung erfolgt insbesondere programmgesteuert, unter Verwendung mindestens eines Programmparameters.

Diese Behandlung erfolgt insbesondere gemäß mindestens einem Steuerparameter, der die Behandlung der Laborprobe mittels der Behandlungseinrichtung bestimmt. Ein Steuerparameter kann einen Zeitraum festlegen, einen Zeitpunkt, ein bestimmtes Probenvolumen und/oder Dosiervolumen, eine bestimmte Probentemperatur, etc. Ein Steuerparameter kann die automatische Verwendung eines bestimmten Transportkopfes, eines bestimmten Typs eines Transportbehältnisses, eines bestimmten Typs von Probebehältnissen, einer oder mehrerer individuelle Proben oder von bestimmten Positionen dieser Komponenten im Arbeitsbereich betreffen. Ein Steuerparameter kann die Behandlung einer individuellen Probe betreffen oder die Behandlung mehrerer oder vieler Proben.

Vorzugsweise wird ein Steuerparameter in Abhängigkeit von mindestens einem Programmparameter automatisch vom Laborautomat ausgewählt, insbesondere automatisch in Abhängigkeit von den vom Benutzer ausgewählten Programmparametern automatisch ausgewählt. Dadurch hat der Benutzer den Vorteil, dass er nicht alle Steuerparameter einzeln bestimmen muss. Der Benutzer muss keine Kenntnisse über die Programmierung des Automaten besitzen. Vielmehr erfolgt die Auswahl der für die Behandlung notwendigen Steuerparameter mittels der vom Benutzer eingegebenen Porgrammparameter. Dadurch ist die Verwendung des Laborautomaten besonders komfortabel.

Ein Steuerparameter kann auch einem Programmparameter entsprechen.

Der Transport einer Probe kann ein Transport aus einem Probenbehältnis in ein Transportbehältnis und/oder aus dem Transportbehältnis in ein Probenbehältnis oder einen sonstigen Zielort sein. Dieser Transport erfolgt insbesondere programmgesteuert, unter Verwendung mindestens eines Programmparameters.

Das Transportbehältnis kann z.B. ein Dispenserbehältnis sein, das einen beweglichen Kolben und eine Einlass-/Auslassöffnung aufweist. Der Kolben erzeugt einen Unterdruck bzw. Überdruck im Dispenserbehältnis und saugt so die Probe in das Behältnis hinein oder gibt sie wieder ab. Dieser Vorgang folgt dem Verdrängerprinzip, d.h. die zu bewegende, meist flüssige und somit inkompressibele Probe wird zwangsbewegt, indem das zuvor von der Probe eingenommene Volumen vom Kolben bewegt wird. Der Kolben wird in der Regel von einer Bewegungseinrichtung bewegt, insbesondere programmgesteuert bewegt, die dem Laborautomaten zugeordnet ist.

Das Transportbehältnis kann ferner eine Pipettenspitze sein. Eine Pipettenspitze weist eine Einlass-/Auslassöffnung auf, und eine zweite Öffnung. Die zweite Öffnung wird an eine Ansaugeinrichtung gekoppelt, so dass durch einen Unterdruck eine flüssige Probe aus einem Probenbehältnis in das Transportbehältnis gesaugt (pipettiert) werden kann. Die Abgabe der Probe erfolgt durch Ventilieren des Ansaugbereichs, mittels Gravitation und/oder über einen Überdruck, der z.B. über die zweite Öffnung im Pipettenspitze erzeugt wird.

Das Transportbehältnis besteht vorzugsweise teilweise oder vollständig aus Kunststoff. Es ist vorzugsweise ein Verbrauchsartikel, der typischer Weise nur für eine Behandlung oder eine geringe Zahl von Behandlungsschritten der Probe verwendet wird. Das Transportbehältnis kann aber auch teilweise oder vollständig aus einem anderen Material bestehen.

Der Transport einer Probe kann ein Transport der Probe von einer Ausgangsposition in eine Zielposition sein. Die Ausgangsposition kann vorliegen, wenn die Probe in einem ersten Probenbehältnis angeordnet ist und die Zielposition dieser Probe kann ihre Position in einem zweiten Probenbehältnis sein, in das die Probe übertragen wird. Diese Art des Transports wird vorliegend auch als Probentransfer oder Transfer bezeichnet. Ein Probentransfer wird in der Praxis meist durchgeführt, um eine Probe aus einem Vorratsbehältnis, in dem z.B. die Probe gelagert war und/oder das z.B. eine größere Menge der Probe enthalten kann, in ein zweites Probenbehältnis zu übertragen, in dem die Probe weiter behandelt wird. Dieser Transport erfolgt insbesondere programmgesteuert, unter Verwendung mindestens eines Programmparameters.

Das Transportbehältnis ist vorzugsweise mit einer Transporteinrichtung des Laborautomaten verbunden oder verbindbar.

Ein Probenbehältnis kann ein Einzelbehältnis sein, in dem nur eine einzige Probe enthalten ist, oder kann ein Mehrfachbehältnis sein, in dem mehrere Einzelbehältnisse miteinander verbunden angeordnet sind.

Ein Einzelbehältnis kann ein offenes Behältnis oder ein verschliessbares Behältnis sein. Bei einem verschliessbaren Behältnis kann ein Deckelelement, insbesondere eine Verschlusskappe, vorgesehen sein. Das Deckelelement kann fest mit dem Behältnis verbunden sein, z.B. als Klappdeckel oder Klappverschlusskappe, oder kann als separate Komponent verwendet werden.

Vorzugsweise sind bei einem Mehrfachbehältnis die mehreren Einzelbehältnisse in festen Positionen zueinander angeordnet, insbesondere entsprechend den Kreuzungspunkten eines Gittermusters angeordnet. Die vereinfacht die automatisierte Ansteuerung der Positionen und insbesondere die individuellen Adressierung von Proben. Ein Mehrfachbehältnis kann als Plattenelement ausgebildet sein, bei dem die Einzelbehältnisse so verbunden sind, dass sie eine plattenförmige Anordnung bilden. Die Einzelbehältnisse können als Vertiefungen in einer Platte ausgebildet sein oder können über Stegelemente miteinander verbunden sein. Das Plattenelement kann ein Rahmenelement aufweisen, in dem die Einzelbehältnisse gehalten werden. Diese Verbindungen von Komponenten können integrale Verbindungen sein, d.h. stoffschlüssige Verbindungen und/oder durch einen gemeinsamen Spritzgussprozess erzeugte Verbindungen sein, oder können kraftschlüssig (englisch "force-fit") und/oder formschlüssig (englisch "form-fit") erzeugt sein. Das Plattenelement kann insbesondere eine Mikrotiterplatte sein.

Mehrfachbehältnisse können eine Mehrzahl (von 2 bis 10) Einzelbehältnissen aufweisen. Sie können ferner eine Vielzahl (größer 10) aufweisen, typischer Weise 12, 16, 24, 32, 48, 64, 96, 384, 1536 Einzelbehältnisse. Das Mehrfachbehältnis kann insbesondere eine Mikrotiterplatte sein. Eine Mikrotiterplatte kann gemäß einem oder mehreren Industriestandard(s) ausgebildet sein, insbesondere der Industrienormen ANSI/SBS 1-2004, ANSI/SBS 2-2004, ANSI/SBS 3-2004, ANSI/SBS 4-2004.

Das maximale Probenvolumen, das von einem Transportbehältnis oder einem Probenbehältnis aufnehmbar ist, liegt typischer Weise zwischen 0,01 ml und 100 ml, insbesondere bei 10 - 100 µl, 100 - 500 µl, 0,5 - 5 ml, 5-25 ml, 25-50 ml, 50-100 ml, abhängig vom Typ des gewählten Transportbehältnis oder Probengefäßes.

Ein Probenbehältnis kann einen Informationsbereich aufweisen, der Informationen über das Probenbehältnis oder über dessen Inhalt aufweisen kann. Der Informationsbereich kann codierte Information aufweisen, z.B. einen Barcode oder QR-Code, oder einen RFID-Chip, oder eine anders codierte Information. Die Information kann Information zur Identifizierung der Probe und/oder eines Probenbehältnisses aufweisen. Der Laborautomat kann ein Informationsleseeinrichtung aufweisen, um diese Information zu lesen und, vorzugsweise der Steuereinrichtung zur Verfügung zu stellen.

Das Probenbehältnis besteht vorzugsweise teilweise oder vollständig aus Kunststoff. Es ist vorzugsweise ein Verbrauchsartikel, der typischer Weise nur für eine Behandlung oder eine geringe Zahl von Behandlungsschritten der Probe verwendet wird. Das Probenbehältnis kann aber auch teilweise oder vollständig aus einem anderen Material bestehen.

Das Probenbehältnis ist vorzugsweise mit einer Transporteinrichtung des Laborautomaten transportierbar.

Der Laborautomat ist vorzugsweise dazu ausgebildet, eine Vielzahl von Proben nacheinander und/oder parallel zu behandeln. Insbesondere ist der Laborautomat vorzugsweise dazu ausgebildet, eine Vielzahl von Probengefäßen, insbesondere Einzelbehältnisse und/oder Mehrfachbehältnisse, programmgesteuert zu behandeln, insbesondere zu transportieren, zu entleeren und/oder zu befüllen.

Vorzugsweise weist der Laborautomat mindestens eine Halteeinrichtung für mindestens ein Probenbehältnis auf, insbesondere einen Halterahmen zum Halten mehrerer Einzelbehältnisse, bezeichnet als "Probengefäßrack". Die Halteeinrichtung ist vorzugsweise transportabel ausgebildet, um innerhalb des Arbeitsbereichs des Laborautomaten, oder zwischen unterschiedlichen Arbeitsbereichen beweglich zu sein. Durch die Halteeinrichtung können eine Mehrzahl oder Vielzahl von Einzelbehältnissen an einer vorbestimmten Position der Halteeinrichtung gehalten werden. Dadurch wird die individuelle programmgesteuerte Ansteuerung oder Adressierung von Probenbehältnissen oder Proben vereinfacht.

Eine Arbeitsstation kann Hilfsmittel zur Positionierung und/oder Ausrichtung von einer oder mehrere Komponenten an dieser Arbeitsposition aufweisen. Diese Komponenten können z.B. eine, mehrere, oder viele Einzelgefäße sein, oder können ein oder mehrere Mehrfachbehältnisse aufweisen, oder eine Halteeinrichtung für Probengefäße aufweisen. Diese Hilfsmittel können der kraft- und/oder formschlüssigen Verbindung dieser Komponenten mit der Arbeitsstation dienen. Z.B. können in der Arbeitsstation an vorbestimmten Positionen der Arbeitsstationen als Hilfsmittel Vertiefungen in der Arbeitsfläche vorgesehen sein, um dort Erhebungen der genannten Komponenten als komplementäre Hilfsmittel formschlüssig aufzunehmen und so die Positionierung und/oder Ausrichtung zu bewirken.

Es kann eine oder mehrere Adaptereinrichtungen vorgesehen sein, um eine erste Halteeinrichtung in vorbestimmter Weise an einer zweiten Halteeinrichtung oder einer Arbeitsstation anzuordnen, insbesondere dort zu positionieren und/oder auszurichten.

Der Laborautomat weist vorzugsweise mindestens einen Arbeitsbereich auf, der zur Umgebung offen sein kann oder durch eine Gehäuseeinrichtung teilweise oder vollständig abgeschirmt sein kann. Vorzugsweise ist die Gehäuseeinrichtung teilweise transparent, um dem Benutzer die Beobachtung der Vorgänge zu ermöglichen, die im Arbeitsbereich, abgeschirmt durch die Gehäuseeinrichtung, programmgesteuert ablaufen.

Vorzugsweise weist der Laborautomat genau einen Arbeitsbereich auf. Ein solcher Laborautomat ist kompakt und kann sich insbesondere zur Verwendung auf einem Labortisch eignen, wobei er dann insbesondere auch als Tischgerät bezeichnet wird. Der Tisch kann z.B. die Workbench eines chemischen, biochemischen oder biomedizinischen Labors sein. Der Laborautomat kann auch zur Aufstellung in einem solchen Labor ausgebildet sein. Ein Laborautomat mit einem Arbeitsbereich kann ferner als unabhängig arbeitendes Gerät eines solchen Labors ausgebildet sein, oder kann in einen Geräteverbund eingebunden sein/werden.

Der Laborautomat kann auch als Laborstraße ausgebildet sein, bei dem mehrere Arbeitsbereiche so benachbart angeordnet sind, dass mittels eine Transportvorrichtung eine, mehrere oder eine Vielzahl von Proben, nacheinander und/oder parallel zwischen den Arbeitsbereichen transportiert werden können. Ein Arbeitsbereich einer Laborstraße ist vorzugsweise dazu ausgebildet, dass eine bestimmte Laboraufgabe, betreffend meistens die parallele und/oder sequentielle Bearbeitung einer Vielzahl von Proben, durchgeführt wird. Durch diese Spezialisierung jedes Arbeitsbereichs wird ein hoher Arbeitsdurchsatz der Laborstrasse erreicht. Zur Durchführung einer solchen bestimmten Aufgabe kann vorgesehen sein, dass in jedem Arbeitsbereich nur eine Art der Behandlung mindestens einer Probe, oder nur wenige Arten der Behandlung, z.B. zwei bis zehn Behandlungsarten durchgeführt werden. Die Transportvorrichtung kann ein Schienensystem aufweisen und/oder eine Robotereinrichtung zum programmgesteuerten Bewegen von Proben bzw. Probenbehältnissen.

Ein Laborautomat kann mit einem LIMS verbunden oder verbindbar sein. LIMS steht für Labor-Informations- und Management-System. Ein LIMS ist in bekannter Weise ein Softwaresystem, das die Datenverarbeitung im chemischen, physikalischen, biologischen, medizinischen automatischen oder teilautomatischen Labor betrifft. Solche Daten können aus Messungen der Proben stammen, und/oder können die Steuerung der Bearbeitung der Daten betreffen. Ein LIMS dient vorzugsweise der Messwerterfassung und der Messwertauswertung. LIMS wird dazu verwendet, um den Arbeitsdurchsatz in einem Labor zu steigern und/oder die Effizienz der Behandlung von Laborproben zu optimieren.

Ein Arbeitsbereich kann eine vorzugsweise im Wesentlichen planare, vorzugsweise horizontal angeordnete Arbeitsfläche aufweisen. Der Arbeitsbereich kann mehrere vorbestimmte Arbeitsstationen aufweisen. Eine Arbeitsstation kann einem Abschnitt des Arbeitsbereichs zugeordnet sein. Dieser Zuordnung kann fest sein oder kann programmgesteuert bestimmt werden. Eine Arbeitsstation kann fest konfiguriert sein oder kann unterschiedlich bestückbar sein.

Die Position der Arbeitsstationen, und/oder der Zustand der Bestückung der Arbeitsstation, können als Information im Laborautomaten, insbesondere der Speichereinrichtung, gespeichert sein. Diese Information kann verwendet werden, um die programmgesteuerte Behandlung von Proben zu ermöglichen, die an bestimmten Positionen des Arbeitsbereichs angeordnet sind, und die an einer oder mehrer dieser Arbeitsstationen behandelt werden sollen.

Eine Arbeitsstation kann zur Lagerung von Stoffen dienen, z.B. zur Lagerung von Proben, Reinigungsmitteln, Abfall.

Eine Arbeitsstation kann zur Lagerung von Werkzeugelementen dienen.

Ein Werkzeugelement kann z.B. ein Transportkopf für den Fluidtransfer sein, insbesondere ein Pipettierkopf, der einen Verbindungsabschnitt zur Verbindung von einer Pipettenspitze (Einkanalpipettierkopf) oder zur Verbindung von mehreren Pipettenspitzen (Mehrkanalpipettierkopf) mit dem Pipettierkopf aufweisen kann. Über mindestens einen druck- und gasdichten Kanal, der mit dem Pipettierkopf verbunden ist, lässt sich Flüssigkeit in die mindestens eine Pipettenspitze saugen, wenn diese mit dem dem Verbindungsabschnitt verbunden ist. Dieses Pipettieren erfolgt beim Laborautomaten insbesondere programmgesteuert, insbesondere beeinflusst durch mindestens einen Programmparameter. Der Transportkopf kann auch ein Dispensierkopf sein, der mindestens eine Bewegungseinrichtung zur Bewegung eines Kolbens der Dispenserspitze aufweist. Die Bewegung der Bewegungseinrichtung erfolgt beim Laborautomaten insbesondere programmgesteuert, insbesondere beeinflusst durch mindestens einen Programmparameter. Der Transportkopf kann zur Flüssigkeitsdosierung dienen, insbesondere für die Dosierung in unterschiedlichen Bereichen; ein Transportkopf kann zur Dosierung einer flüssigen Probe mit einem Volumen ausgebildet sein, das aus einem für diesen Transportkopf spezifischen Volumenbereich ausgewählt sein kann: z.B. 1 - 50 µL, oder 20 - 300 µL,oder 50 -1000 µL, ("I" und "L" stehen jeweils als Abkürzung für Liter). Ein Transportkopf kann als Einkanalkopf ausgebildet sein, bei dem nur eine Probe transportiert wird, oder kann als Mehrkanal, insbesondere Achtkanal- oder 12-Kanal ausgebildet sein, bei dem mehrere Proben parallel bearbeitet bzw. transportiert werden. Es sind vorzugsweise spezifische Transportbehältnisse vorgesehen, die in Abhängigkeit vom jeweiligen Typ von Transportkopf, insbesondere gemäß dem entsprechenden Volumenbereich eingesetzt werden können.

Ein Werkzeugelement kann z.B. ein Transportkopf für den Transport von Gegenständen sein, z.B. eine Trage- und/oder Greifwerkzeug zum Tragen und /oder Greifen eines Gegenstands. Ein Tragewerkzeug kann einen Befestigungsabschnitt zum lösbaren Befestigen des Gegenstands am Tragewerkzeug aufweisen, z.B. durch kraftschlüssiges und/oder formschlüssiges und/oder magnetisches Verbinden des Gegenstands mit dem Tragewerkzeug. Auf diese Weise können innerhalb der Arbeitsfläche oder zwischen mehreren Arbeitsbereichen und/oder Arbeitsflächen.

Ein Werkzeugelement kann ferner eine Behandlungseinheit sein, z.B. zur Durchführung einer thermischen, akustischen, optischen und/oder mechanischen Behandlung mindestens einer Probe.

Eine Arbeitsstation kann zur Durchführung einer Behandlung von Laborproben dienen. Dazu kann eine Behandlungseinheit an der Arbeitsstation fest installiert sein oder kann dort anordenbar sein. Diese Behandlung erfolgt insbesondere programmgesteuert, unter Verwendung mindestens eines Programmparameters.

Eine Behandlungseinheit zur thermischen Behandlung kann eine Temperiereinrichtung aufweisen, um die mindestens eine Probe zeitgleich oder nacheinander, insbesondere innerhalb festgelegter Zeiträume, auf bestimmte Temperaturen einzustellen und/oder diese Temperaturen mit bestimmten Raten zu ändern. Diese thermische Behandlung erfolgt insbesondere programmgesteuert, unter Verwendung mindestens eines Programmparameters. Auf diese Weise lässt sich z.B. an einer, mehrer oder einer Vielzahl von PCR-Proben eine PCR (Polymerasekettenreaktion) durchführen.

Eine Behandlungseinheit zur Messung einer Laborprobe kann eine Messeinrichtung aufweisen. Die Messeinrichtung kann einen Detektor aufweisen, der mindestens einen physikalischen Parameter entsprechend mindestens einer physikalischen Eigenschaft mindestens einer Probe misst. Ein physikalischer Parameter kann einer Intensität einer Strahlung entsprechen, insbesondere der Intensität einer Strahlungsemission der Probe, z.B. der Intensität des Fluoreszenzlichts der unter Anregung fluoreszierenden Probe, insbesondere wellenlängenabhängig, d.h. unter Erfassung eines bestimmten Spektrums. Ein physikalischer Parameter kann der Intensität einer von der Probe transmittierte Strahlung, eine von der Probe gestreute oder reflektierte Strahlung entsprechen. Der physikalische Parameter kann die Probentemperatur betreffen, oder eine elektrische Eigenschaft der Probe, die z.B. durch eine kapazitative Messung bestimmbar sein kann oder durch eine Widerstandsmessung bestimmbar sein kann. Die Messeinrichtung kann durch mindestens einen Programmparameter steuerbar sein, ihre Messwerte können insbesondere durch die Steuereinrichtung des Laborautomaten erfassbar sein und insbesondere als Messdaten in der Speichereinrichtung speicherbar sein, und/oder von der Prozessoreinrichtung verarbeitet werden.

Eine Behandlungseinheit kann eine Bearbeitungseinrichtung zum Bearbeiten der mindestens einen Probe aufweisen, insbesondere um eine Behandlung der mindestens einen Probe durchzuführen. Eine Bearbeitungseinrichtung kann der mechanischen Bearbeitung der Probe dienen, z.B. dem Bewegen, z.B. Schütteln oder Vibrieren, der thermischen Bearbeitung oder Behandlung mittels Strahlung, um eine (bio-)chemische Reaktion oder biologische oder biomedizinische Zustandsänderung, z.B. sterilisieren, der Probe zu bewirken. Diese Bearbeitung erfolgt insbesondere programmgesteuert, insbesondere unter Verwendung mindestens eines Programmparameters.

Der Laborautomat kann eine Transporteinrichtung zum Transport mindestens eines beweglichen Kopfabschnitts aufweisen. Der Kopfabschnitt kann ein Transportkopf zum Transportieren mindestens einer Probe und/oder zum Transportieren mindestens eines Werkzeugelements sein. Der Kopfabschnitt kann einen Verbindungsabschnitt zur Verbindung mindestens eines Transportbehältnisses mit der Transporteinrichtung aufweisen.

Die Transporteinrichtung kann ferner eine programmgesteuerte Bewegungseinrichtung, auch bezeichnet als Robotereinrichtung, aufweisen, um den Kopfabschnitt und/oder den Verbindungsabschnitt und insbesondere gegebenenfalls das mindestens eine Transportbehältnis programmgesteuert zu bewegen, insbesondere gemäß einem durch die Steuereinrichtung, oder eine andere Steuereinrichtung, vorgegebenen Bewegungsablauf. An diesem Kopfabschnitt kann dieser Verbindungsabschnitt vorgesehen sein. Ferner kann an diesem Kopfabschnitt der Verbindungsabschnitt zum Verbinden eines Werkzeugelements mit dem Kopfabschnitt vorgesehen sein.

Die Robotereinrichtung kann eine oder mehrere Antriebseinrichtungen, z.B. elektrische Motoren, aufweisen, um die programmgesteuerte Bewegung von beweglichen Komponenten zu ermöglichen, z.B. eines beweglichen Kopfabschnitts, insbesondere eines Halte- oder Greifwerkzeugs oder eines anderen beweglichen Werkzeugelementes, z.B. einer beweglichen Behandlungseinheit. Die Robotereinrichtung kann einen ein- oder mehrgliedrigen Bewegungsarm aufweisen, mittels dem der Transport des Kopfabschnitts, und insbesondere der Transport von Proben, zwischen verschiedenen, vorzugsweise frei wählbaren, Positionen des Arbeitsbereichs möglich ist. Die Robotereinrichtung kann ferner ein Schienensystem aufweisen, wobei der Kopfabschnitt in diesem Fall an einem beweglichen Gleit- oder Rollelement befestigt ist, dass über dieses Schienensystem an die Positionen bewegbar ist, die durch die Anordnung des Schienensystems vorgegeben sind. Die Bewegungen der Robotereinrichtung sind vorzugsweise programmgesteuert, und insbesondere gesteuert durch mindestens einen Programmparameter.

Der Laborautomat kann eine Informationsleseeinrichtung aufweisen, um eine Information über eine Probe und/oder ein Probenbehältnis und/oder eine Behandlungsanweisung für diese Probe und/oder dieses Probenbehältnis zu lesen und, vorzugsweise, der Steuereinrichtung des Laborautomaten zur Verfügung zu stellen.

Der Laborautomat weist vorzugsweise mindestens eine Dosiereinrichtung auf. Mit dieser kann vorzugsweise mindestens ein gewünschtes Probenvolumen zur Einstellung eines gewünschten zu transportierenden Probenvolumens dosiert werden. Die Dosiereinrichtung kann z.B. gebildet sein, indem die Steuereinrichtung dazu ausgebildet ist, den Transport eines vorbestimmten Volumens einer Probe aus einem Probenbehältnis in ein Transportbehältnis und/oder aus dem Transportbehältnis in ein Probenbehältnis oder einen sonstigen Zielort zu bewirken. Dies erfolgt z.B. durch die Ansteuerung einer Ansaugeinrichtung einer Pipettiereinrichtung oder die Ansteuerung einer Bewegungseinrichtung einer Dispensiereinrichtung, die jeweils vorzugsweise in einen Transportkopf integriert sind. Diese Ansteuerung erfolgt vorzugsweise programmgesteuert, und insbesondere gesteuert durch mindestens einen Programmparameter.

Der Laborautomat weist vorzugsweise mindestens eine Zeitgebereinrichtung und/oder vorzugsweise eine Zeitnehmereinrichtung auf, um die zeitabhängige Behandlung der Proben zu ermöglichen. Die zeitabhängige Behandlung erfolgt vorzugsweise programmgesteuert, und insbesondere gesteuert durch mindestens einen Programmparameter.

In einer beispielhaften Gestaltung des Laborautomaten ist dieser dazu ausgebildet, in Abhängigkeit von der vom Benutzer gewählten Behandlungsart und der vom Benutzer eingegebenen Programmparameter automatisch eine oder mehrere der nachfolgend genannten Komponenten automatisch zur Verwendung bei der programmgesteuerten Behandlung auszuwählen:
- mindestens ein geeignetes Probenbehältnis, insbesondere geeignet zur Aufnahme mehrere Proben, die gemeinsam bearbeitet werden sollen, die z.B. gemischt werden sollen oder zwischen denen eine chemische Reaktion oder biochemische, biologische oder biomedizinische Wechselwirkung auftreten soll;
- mindestens ein geeignetes Transportbehältnis, insbesondere Pipettenspitze und/oder Dispenserspitze;
- mindestens einen geeigneten Transportkopf, mit dem das vorzugsweise automatisch gewählte Transportbehältnis verbindbar ist,
- mindestens ein geeignetes Werkzeugelement, das der Durchführung der gewünschten Behandlung dient.

In einer weiteren beispielhaften Ausführungsform ist der Laborautomat dazu ausgebildet, in Abhängigkeit von der vom Benutzer gewählten Behandlungsart und der vom Benutzer eingegebenen Programmparameter automatisch einer oder mehrere der nachfolgend genannten Steuerparameter automatisch zur Verwendung bei der programmgesteuerten Behandlung auszuwählen:
- mindestens ein Zeitraum, zu dem ein bestimmter Arbeitsschritt der Behandlung durchgeführt wird;
- mindestens ein Probenvolumen und/oder Dosiervolumen;
- mindestens eine Arbeitsposition der mindestens einen Arbeitsfläche;
- Bewegungsparameter zur Festlegung der für die gewünschte Behandlung der Probe erforderlichen Bewegungsablauf der Robotereinrichtung des Laborautomaten.

Durch die automatische Auswahl der genannten Komponenten und/oder der Steuerparameter in Abhängigkeit von mindestens einem Programmparameter, insbesondere in Abhängigkeit von dem mindestens einen, vom Benutzer ausgewählten Programmparameter, ergibt sich für den Benutzer der Vorteil, dass er die Auswahl der Komponenten und Steuerparameter nicht selbst einzeln bestimmen muss. Vielmehr erfolgt die Auswahl der für die Behandlung notwendigen Steuerparameter mittels der vom Benutzer eingegebenen Programmparameter. Der Benutzer muss keine Kenntnisse über die Programmierung des Automaten besitzen. Dadurch ist die Verwendung des Laborautomaten besonders komfortabel.

Durch die automatische Auswahl der genannten Komponenten und/oder der Steuerparameter in Abhängigkeit von mindestens einem Programmparameter kann z.B. erreicht werden, dass aufgrund der Anwenderangaben (z.B. 20 Proben zu verdünnen) automatisch der richtige Pipettierkopf gegriffen wird, bzw., allgemeiner, der passende Tool, z.B. Transportkopf und/oder Werkzeugkopf verwendet wird. D.h. der Anwender muss dann nicht entscheiden, was das optimale Tool ist, sondern er entscheidet nur, was seine gewünschte Behandlung ist, z.B. die Nukleinsäureaufreinigung in einer gewünschten Weise. Der Benutzer, z.B. ein Biologe, eine biologisch-technischer Assistent, ein medizinisch-technischer Assistent muss dann also lediglich die Entscheidungen treffen, die er aufgrund seiner Ausbildung einfach und schnell treffen kann, er muss aber weder eine abstrakte Programmiersprache beherrschen, noch muss er größere Berechnungen anstellen.

Die Behandlungseinrichtung des Laborautomaten weist auf: vorzugsweise mindestens einen Arbeitsbereich, vorzugsweise mindestens eine Transporteinrichtung, vorzugsweise mindestens eine Behandlungseinheit.

Vorzugsweise hat der Laborautomat die Eigenschaft, die vom Benutzer eingegebenen Programmparameter dauerhaft zu speichern und später automatisch oder vom Benutzer ausgelöst wieder zu laden. Der Benutzer kann dann einzelne der Parameter ändern, um eine Probenbehandlungsart vollständig zu definieren. Dadurch wird der Bedienkomfort erhöht und die Fehleranfälligkeit verringert. Dies ist vor dem Hintergrund vorteilhaft, dass Laborautomaten besonders effizient für wiederkehrende Prozesse verwendet werden.

Weitere bevorzugte Ausgestaltungen des erfindungsgemäßen Laborautomaten und des erfindungsgemäßen Verfahrens ergeben sich aus der nachfolgenden Beschreibung der Ausführungsbeispiele in Zusammenhang mit den Figuren und deren Beschreibung. Gleiche Bauteile der Ausführungsbeispiele werden im Wesentlichen durch gleiche Bezugszeichen gekennzeichnet, falls dies nicht anders beschrieben wird oder sich nicht anders aus dem Kontext ergibt. Es zeigen:
Fig. 1 zeigt schematisch ein Ausführungsbeispiel des erfindungsgemäßen Laborautomaten.
Fig. 2 zeigt ein Touchscreen-Display des erfindungsgemäßen Laborautomaten aus Fig. 1, mit einem ersten Displaybereich und einem zweiten Displaybereich.
Fig. 3a zeigt schematisch die Verwendung der Programmparameter, des Steuerprogramms und der Steuerparameter in einem erfindungsgemäßen Laborautomaten zur Durchführung des erfindungsgemäßen Verfahrens, gemäß einem Ausführungsbeispiel.
Fig. 3b zeigt schematisch die Verwendung der Programmparameter, des Steuerprogramms, eines Programmmoduls und der Steuerparameter, gemäß einem Ausführungsbeispiel.
Fig. 3c zeigt schematisch die Verwendung der Programmparameter, des Steuerprogramms, eines Programmmoduls, eines Methodenprogramms und der Steuerparameter, gemäß einem Ausführungsbeispiel.

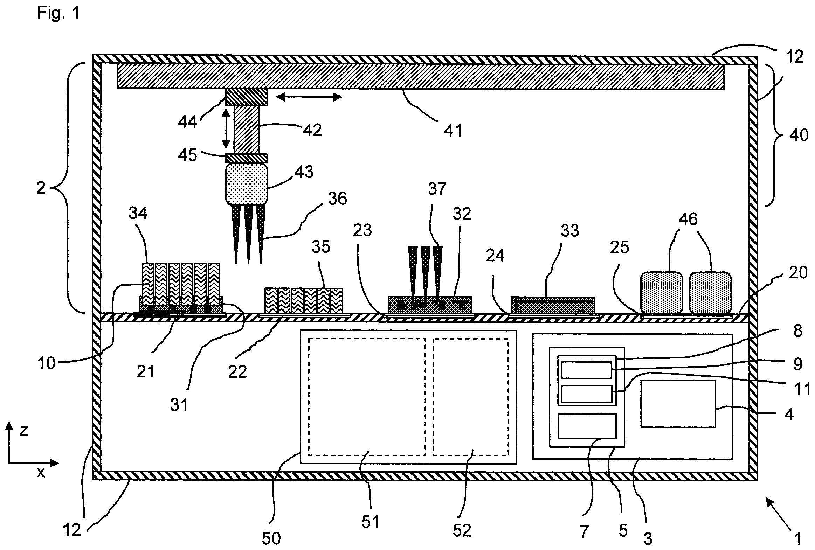

Fig. 1 zeigt den Laborautomaten 1. Der Laborautomat 1 dient der programmgesteuerten, automatischen Behandlung von flüssigen Laborproben 10. Der Laborautomat ist als Tischgerät ausgebildet. Er weist eine Behandlungseinrichtung 2 zur Durchführung einer Behandlung gemäß einer oder mehrerer Behandlungsarten auf.

Der Laborautomaten 1 weist ferner eine elektronische Steuereinrichtung 3 auf. Diese enthält eine Prozessoreinrichtung 4 zur Datenverarbeitung, wobei diese Datenverarbeitung die Ausführung eines Steuerprogramms zum Steuern des Laborautomaten und der Behandlung beinhaltet. Die elektronische Steuereinrichtung 3 beinhaltet ferner mindestens eine Speichereinrichtung 5 zum Speichern von Daten, insbesondere dem Steuerprogramm 7 und den Programmparametern 8. Die Programmparameter 8 beinhalten die benutzerseitig zur Durchführung einer gewünschten Behandlung erforderlichen Programmparameter 9 und weitere Programmparameter 11, die z.B. berechnet werden können, oder bereits im Laborautomat gespeichert sind, oder zu diesem Laborautomaten übertragen werden.

Der Laborautomat weist ein Basisteil 12 auf, das eine Basisplatte, einen Gehäuserahmen und eine Gehäuseeinrichtung beinhaltet.

Horizontal bedeutet im Rahmen der Beschreibung der Erfindung parallel der x-Achse, parallel zur y-Achse, also senkrecht zu Zeichenebene, "vertikal" bedeutet "entlang der Gravitationsrichtung", d.h. entlang der z-Achse. Diese Acshen gehören zu einem kartesischen Koordinatensystem x,y,z, wie in Fig. 1 eingezeichnet. Die positive z-Achse zeigt nach "oben", die negative z-Achse zeigt nach "unten", also in Richtung der Gravitation.

Der Laborautomat 1 weist ferner eine horizontal angeordnete Arbeitsplattform mit einem Arbeitsbereich 20, der hier als planare, horizontal angeordnete Arbeitsfläche 20 ausgebildet ist. Diese Arbeitsplattform ist der Behandlungseinrichtung 2 zugeordnet und dient der Behandlung der Proben. Auf der Arbeitsfläche sind verschiedene Arbeitsstationen 21, 22, 23, 24, und 25 angeordnet, und zwar in vorbestimmten Positionen dieser Arbeitsfläche. Das vereinfacht die Adressierung und Ansteuerung von Positionen innerhalb einer Arbeitsstation.

Die Arbeitsstation 21 ist ein Flächenabschnitt des Arbeitsbereichs. Dort ist eine Halteeinrichtung 31, nämlich ein Probengefäßrack 31 zum Halten mehrere Einzelbehältnisse, nämlich Probenröhrchen 34, in vorbestimmten Positionen des Probengefäßracks 31. Die Halteeinrichtung 31 ist über eine Hilfseinrichtung (nicht gezeigt) in vorbestimmter Position auf dieser Arbeitsfläche 20 ausgerichtet und psoitioniert, nämlich zwei Pins (nicht gezeigt) auf der Arbeitsplatte 20 und zwei Vertiefungen (nicht gezeigt) am Boden der Halteeinrichtung, in die in diese Pins formschlüssig eingreifen. Dies gilt analog für die Positionierung des Mehrfachbehältnisses 35, das eine Mikrotiterplatte ist, der Halteeinrichtung 32 für Pipettenspitzen 37, der Thermomix-Einrichtung 33, die dem gleichzeitigen Mischen uhnd Temperieren von Proben dient, und den Kopfabschnitten 46, die an der Arbeitsstation 25 gelagert sind, um bei Bedarf automatisch angesteuert und verwendet zu werden.

Die Behandlungseinrichtung 2 weist ferner eine Transporteinrichtung 40 zum Transportieren der Proben auf. Die Transporteinrichtung 40 weist eine Robotereinrichtung auf, die eine Schieneneinrichtung zur Bewegung des Liftelements 42 aufweist. Die Schieneneinrichtung ist zur Bewegung des mit dem Liftelement 42 verbundenen Kopfabschnitts 43 parallel der x-Richtung ausgebildet, und zwar mittels der Schienenelements 41, und zur Bewegung parallel der y-Richtung ausgebildet, und zwar mittels des Schienenelements 44. Die vertikale Bewegung des Kopfabschnitts 43 erfolgt mittels des Liftelements 42. Der Robotereinrichtung ist die Steuereinrichtung 3 oder eine zweite Steuereinrichtung zugeordnet. Die (zweite) Steuereinrichtung steuert bei einer Behandlung von Laborproben den Bewegungsablauf, gemäß dem der Kopfabschnitt 43 durch die Transporteinrichtung 40 bewegt wird.

Der Laborautomat 1 weist ferner das Display 50 auf, das als berührungsempfindliches Display ausgebildet ist ("Touchscreen-Display"). Das Display weist einen ersten Displaybereich und einen zweiten Displaybereich auf.

Der erste Displaybereich wird zur Durchführung einer gewünschten Behandlung insbesondere in folgender Weise genutzt: Anzeigen mindestens eines Abfragebereichs in dem ersten Displaybereich des Displays, wobei ein Abfragebereich mindestens einen Informationsbereich und mindestens einen, diesem mindestens einen Informationsbereich zugeordneten Eingabebereich aufweist (Schritt a). Ferner: Sukzessives Abfragen von zur programmgesteuerten Ausführung der Behandlung erforderlichen Programmparametern, indem eine Information zu dem mindestens einen Programmparameter in dem mindestens einen Informationsbereich angezeigt wird und eine Eingabe des Benutzers, insbesondere ein Berühren des mindestens einen Eingabebereichs, in dem mindestens einen Eingabebereich erfasst wird (Schritt b).

Der zweite Displaybereich wird in folgender Weise genutzt: jeweils nach Eingabe mindestens eines Programmparameters durch den Benutzer: Anzeigen des mindestens einen, vom Benutzer eingegebenen Wertes des mindestens einen Programmparameters in einem Informationsbereich des zweiten Displaybereich des Displays, wobei nach dem Abfragen dieser erforderlichen Programmparameter einer, mehrere oder alle vom Benutzer eingegebenen Werte dieser Programmparameter in diesem zweiten Displaybereich angezeigt werden (Schritt c).

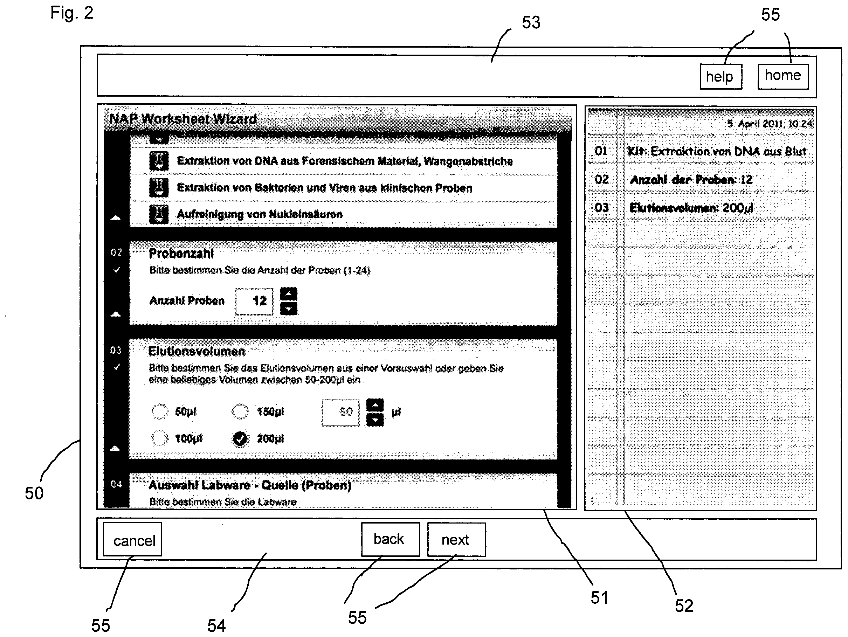

Die Schritte a), b) und c) werden weiter anhand der Fig. 2 beschrieben.

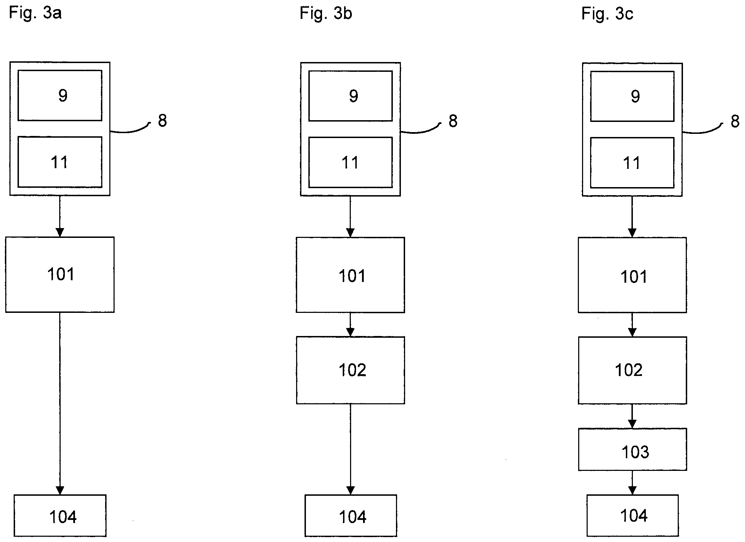

Über die Abfrage der benutzerseitig zur Behandlung der Probe(n) erforderlichen Programmparameter 9 im ersten Displaybereich 51 und die Anzeige dieser Programmparameter 9 mit deren Beschreibung im zweiten Displaybereich 52 wird eine einfache Bedienung des Laborautomaten ermöglicht. Insbesondere ist der Laborautomat dazu ausgebildet, aus den benutzerseitig eingegebenen Programmparametern 9 alle Informationen und insbesondere Steuerparameter 104 (siehe Fig. 3a) abzuleiten, die zur Durchführung der vom Benutzer gewünschten Behandlung der Laborprobe mittels einem Steuerprogramm 101 (siehe Fig. 3a) notwendig sind. Durch diese Maßnahmen wird erreicht, dass der programmgesteuerte Laborautomat 1 für zumindest teilweise vom Benutzer definierte Behandlungen verwendbar ist, ohne dass der Benutzer Programmierkenntnisse zur Programmierung eines Steuerungsprogramms oder Methodenprogramms benötigt.

Das Steuerprogramm erzeugt aufgrund von rein anwendungsbezogenen Benutzereingaben einen geeigneten Ablauf der Bahndlung der Probe(n), zur Durchführung der spezifischen gewünschten Behandlung gemäß einer Behandlungsart, insbesondere gemäß einer von mehreren zumindest teilweise vorbestimmten Behandlungsarten, deren Daten, insbesondere Programmparameter und/oder Software, bereits in dem Laborautomaten gespeichert sind oder dort nachträglich speicherbar sind. Diese Benutzereingaben sind die Programmparameter 9, die dem Benutzer bereits von den analog manuell durchgeführten Behandlungen bekannt sind, so dass die Bedienung des Laborautomaten 1 für solche Benutzer relativ intuitiv ist. Diese Benutzereingaben betreffen oder sind z.B. die Probenanzahl, einer oder mehrere Verdünnungsfaktoren, Zielvolumina, Positionen der Probe(n) in einem Probengefäßrack 31 oder einer Multiwellplatte 35.

Vorzugsweise gibt es für jede vom Laborautomat durchführbare Behandlungsart ein Programmmodul 102 (siehe Fig. 3b), das in der Speichereinrichtung gespeichert ist oder dort nachträglich speicherbar ist. Das Programmmodul kann die Durchführung der Schritte a), b) und c) steuern oder in einer für die Behandlungsart spezifischen Weise beeinflussen. Schließlich kann das Programmmodul 102 die Erzeugung der Steuerparameter 104 bewirken oder beeinflussen. Jedes Programmmodul 102 sieht eine bestimmte, vorzugsweise geringe (z.B. 2 bis 15) Anzahl N_{T} von Abfrageschritten vor. In diesen Abfrageschritten gibt der Benutzer Werte für mindestens einen Programmparameter 9 ein. Im letzten Abfrageschritt kann der Benutzer die Durchführung der Behandlung auslösen, wobei der Laborautomat die benutzerseitig eingegebenen Programmparameter automatisch berücksichtigt. Der Laborautomat enthält vorzugsweise bereits die für einen Standardfall der Behandlungsart notwendigen Informationen bzw. Programmparameter. Es führt die Behandlung durch, ohne dass der Benutzer weitere Optimierungen durchführen muss. Vielmehr enthalten die von den Programmmodulen erzeugten Behandlungsabläufe bereits spezifische Optimierungen kritischer Behandlungsschritte, z.B. betreffend die Wahl der geeigneten Probenbehältnisse, Transportbehältnisse, Zeitabläufe oder anderer Parameter. Jedem Programmmodul kann eine Entscheidungsbaum zugeordnet sein, gemäß dem die gemäß einem Zweig des Entscheidungsbaum bzw. Verzweigung die erforderlichen Programmparameter 9 abgefragt werden.

Der Vorteil dieser Automatisierung der Programmierung des Laborautomaten lässt sich anhand folgenden Beispiels beschreiben: zur Durchführung einer Verdünnungsreihe mit Proben muss der Arbeitsbereich geeignet bestückt werden, Anweisungen zur Steuerung der Abläufe müssen generiert werden, die Programmparameter dieser Anweisungen müssen gesetzt werden. Für Verdünnungsreihen besteht bei manueller Durchführung oder bei bekannten Laborautomaten des Stands der Technik, die ausschließlich manuell programmierbare Methodenprogramme vorsehen, der Nachteil, dass die unterschiedlichen Volumina für die Dosierbefehle vom Methodenprogrammierer selber ausgerechnet werden müssen. Es müssen, für die schlüssige maschinelle Bearbeitung, bedingte und unbedingte Verzweigungsbefehle hinzugefügt werden. Das erfordert geeignete Programmiererfahrung und Wissen über die Befehle und die Funktionsweise des Gerätes. Bei bevorzugten Ausgestaltungen des erfindungsgemäßen Laborautomaten ist die Vorgehensweise durch die genannte automatische Bestimmung der Steuerparameter dagegen erheblich vereinfacht.

Vorzugsweise erzeugt ein Programmmodul 102 ein Methodenprogramm 103 (siehe Fig. 3c), das für die spezifische, vom Benutzer definierte Behandlung gemäß der vom Benutzer gewählten Behandlungsart als Steuerprogramm dient, das insbesondere alle Steuerparameter zur automatischen Durchführung dieser Behandlung erzeugt. Der Laborautomat kann dazu ausgebildet sein, dass das Methodenprogramm editierbar ist, um vom Benutzer nachträglich verändert zu werden, oder um ein Methodenprogramm optional nicht durch ein Programmmodul automatisch zu erstellen sondern programmieren zu lassen. Dadurch wird eine noch größere Flexibilität bei der Verwendung des Laborautomaten erzielt.

Durch die Behandlungsart-orientierte Benutzerführung mittels der Schritte a) und b) fällt das Aneinanderreihen von Komplexbefehlen und deren Parametrisierung weg. Die Erstellung eines Methodenprogramms erfolgt insbesondere aus dem Programmmodul heraus. Dabei sind die Anweisungen (Befehle) und Programmparameter 11 größtenteils durch die entsprechende Behandlungsart vorgegeben, oder werden automatisch errechnet. Das Verteilungsmuster der jeweiligen Transferbefehle wird automatisch erzeugt. Weitere automatische Berechnungen können betreffen: die Flüssigkeitsmengen, Behältnisgrößen, und/oder Verdünnungsreihen. Zu verwendende Probenbehältnisse, Transportbehältnisse, Werkzeugelemente und/oder Kopfabschnitte werden z.B. automatisch ermittelt oder vom Laborautomaten vorgeschlagen.

Fig. 2 zeigt das Touchscreen-Display 50 mit erstem Displaybereich 51 und zweitem Displaybereich 52. Die Abfrageschritte erfolgen im erstem Displaybereich 51 als Abfragesequenz, hier in Form einer Liste, die durch eine vertikale Wisch-Geste am Touchscreen in vertikaler Richtung gescrollt werden kann. Oberhalb der Liste ist eine eine Titelleiste angezeigt, die z.B. Informationen über die gewählte Behandlungsart wiedergeben kann, hier "NAP". Die Abfragesequenz kann auch als "Wizard" bezeichnet werden. Die Abfrageschritte weisen jeweils einen Eingabebereich auf (heller Bereich), der in mindestens einem Informationsbereich eine Beschreibung des einzugebenden Programmparameters oder andere Information aufweist, hier als Text, wobei neben dem jeweiligen Eingabebereich die Ordnungszahl N des Abfrageschritts angezeigt ist. In Fig 2 ist die Liste so gescrollt worden, dass die Eingabebereiche der Abfrageschritte 1 bis 4 zumindest teilweise sichtbar ist, wobei nur die Ordnungszahlen 2, 3 und 4 sichtbar sind. Ein Häkchen neben den Eingabereichen mit N=2 und N=3 zeigt an, dass zu diesem Abfrageschritt bereits eine Benutzereingabe erfolgte und der/die entsprechenden benutzerseitig erforderlichen Programmparameter 9 bereits eingegeben wurden. Entsprechend den Schritten b) wurden im zweiten Displaybereich die für einen bestimmten Abfrageschritt, hier gezeigt die Ordnungszahlen N= 1, 2 und 3 bereits eine Eingabe erfolgte. Die Information wird hier im zweiten Displaybereich zeilenweise und in Textform gezeigt: links in einer Zeile ist die Ordnungszahl aufgeführt, z.B. "2", dann die Beschreibung des Programmparameters 9, z.B. "Anzahl der Proben", und dann der vom Benutzer eingegebene Wert des entsprechenden Programmparameters, hier z.B. "12".

Das Touchscreen-Display 50 kann mindestens einen weiteren Displaybereich aufweisen. Es weist hier einen dritten Displaybereich 53 und einen vierten Displaybereich 54 auf. Der weitere Displaybereich kann z.B. einen Eingabebereich 55 aufweisen, der als Schaltfläche ausgebildet ist, mit der insbesondere ein Knopf oder Hebel oder dergleichen nachgebildet wird. Vorliegend ist der dritte Eingabebereich eine Titelleiste, die z.B. Informationen über die gewählte Behandlungsart wiedergeben kann. Der dritte Eingabebereich weist ferner die Schaltflächen "help" und "home" auf, mittels derer der Benutzer im Display eine Hilfsinformation, insbesondere zu einer bestimmten Behandlungsart und deren Programmparameter anzeigen lassen kann. Mittels der Schaltfläche "home" kann der Benutzer zu einem Startbildschirm wechseln, um z.B. Grundeinstellungen am Laborautomaten zu ändern, oder die Behandlungsart auszuwählen und den Wizard neu zu starten. Diese Anzeige kann in dem Displaybereich erfolgen, das dem ersten und/oder dem zweiten Displaybereich zumindest teilweise entspricht. Der vierte Displaybereich 54 ist als Bodenleiste ausgebildet und wiest die Schaltflächen 55 "back", "next" und "cancel" auf. Der Laborautomat macht Abfrageschritte kenntlich, die der Benutzer noch nicht bearbeitet hat, z.B. indem er die entsprechenden Eingabebereiche halbtransparent oder anders optisch hervorgehoben darstellt.

## Patentansprüche

1. Laborautomat (1) zur programmgesteuerten Behandlung von mindestens einer Laborprobe (10), aufweisend:
• eine Behandlungseinrichtung (2) zur programmgesteuerten Behandlung der mindestens einen Laborprobe (10), wobei die Behandlung unter Verwendung von mehreren Programmparametern (8), die zumindest teilweise vom Benutzer gewählt (9) werden, gesteuert wird,
• eine elektronische Steuereinrichtung (3) mit
∘ mindestens einer Prozessoreinrichtung (4) zur Datenverarbeitung, wobei diese Datenverarbeitung die Ausführung eines Steuerprogramms (101) zum Steuern des Laborautomaten beinhaltet,
∘ mit mindestens einer Speichereinrichtung (5) zum Speichern von Daten, insbesondere dem Steuerprogramm und den Programmparametern,
• eine Benutzerschnittstelleneinrichtung (50) zur manuellen Eingabe von Daten durch einen Benutzer, und zur Anzeige von Informationen, insbesondere von in diesen Daten enthaltenen Informationen, wobei die Benutzerschnittstelleneinrichtung ein Display (50), insbesondere ein Touch-Screen-Display aufweist,
• und dieses mindestens eine Steuerprogramm (101) zur Steuerung des Laborautomaten, wobei das mindestens eine Steuerprogramm Anweisungen enthält, um folgende Schritte auszuführen:
(a) Anzeigen mindestens eines Abfragebereichs in einem ersten Displaybereich (51) des Displays (50), wobei ein Abfragebereich mindestens einen Informationsbereich und mindestens einen, diesem mindestens einen Informationsbereich zugeordneten Eingabebereich aufweist,
(b) Abfragen von mehreren zur programmgesteuerten Ausführung der Behandlung erforderlichen Programmparametern (9), indem eine Information zu den Programmparametern in dem mindestens einen Informationsbereich angezeigt wird und eine Eingabe des Benutzers, insbesondere ein Berühren des mindestens einen Eingabebereichs, in dem mindestens einen Eingabebereich erfasst wird,
(c) jeweils nach Eingabe mindestens eines Programmparameters durch den Benutzer: Anzeigen des mindestens einen, vom Benutzer eingegebenen Wertes des mindestens einen Programmparameters in einem Informationsbereich des zweiten Displaybereich (52) des Displays (50),
wobei, nach dem Abfragen dieser erforderlichen Programmparameter (9) mehrere oder alle vom Benutzer eingegebenen Werte dieser Programmparameter in diesem zweiten Displaybereich angezeigt werden,
(d) Durchführen der Behandlung unter Verwendung der abgefragten Programmparameter (9)
**dadurch gekennzeichnet, dass** der Laborautomat mindestens ein Programmmodul (102) aufweist, wobei ein vorbestimmtes Programmmodul der Steuerung einer vorbestimmten Laboraufgabe zur Behandlung von Laborproben dient,
• wobei die Behandlung unter Verwendung eines ausgewählten Programmmoduls gesteuert wird, dem die mehreren Programmparameter zugeordnet sind, die zumindest teilweise vom Benutzer gewählt werden,
• wobei die mindestens eine Prozessoreinrichtung insbesondere zur Ausführung mindestens eines Programmmoduls dient und wobei die mindestens eine Speichereinrichtung zum Speichern von dem mindestens einem Programmmodul dient,
• wobei das mindestens eine Steuerprogramm Anweisungen enthält, um die Schritte (a), (b), (c) und (d) in Abhängigkeit von dem ausgewählten Programmmodul auszuführen, wobei die in Schritt (b) abzufragenden Programmparameter dem ausgewählten Programmmodul zugeordnet sind,
• wobei die mindestens eine Prozessoreinrichtung insbesondere zur Ausführung mindestens eines Methodenprogramms zur Steuerung dieser vorbestimmten Laboraufgabe zur Behandlung von Laborproben dient und wobei die mindestens eine Speichereinrichtung zum Speichern mindestens eines Methodenprogramm dient,
• wobei die in Schritt (b) abzufragenden Programmparameter dem unter Verwendung des ausgewählten Programmmoduls erzeugten Methodenprogramm zugeordnet sind,
• wobei das mindestens eine Steuerprogramm Anweisungen enthält, um den Schritt (c2) auszuführen:
(c2) Erzeugen des Methodenprogramms unter Verwendung dieses Programmmoduls in Abhängigkeit von den erforderlichen Programmparametern und der vom Benutzer eingegebenen Programmparameter, und Speichern des Methodenprogramms in der Speichereinrichtung, wobei das Methodenprogramm vom Benutzer editierbar ist, so dass das Methodenprogramm vom Benutzer nachträglich veränderbar ist,
• wobei in Schritt (d) die Durchführung der Behandlung erfolgt, indem das Methodenprogramm ausgeführt wird.

2. Laborautomat gemäß Anspruch 1, wobei das Steuerprogramm dazu ausgebildet ist, das gewünschte Programmmodul vom Benutzer über die Benutzerschnittstelle aus der Anzahl NP>1 von vorbestimmten Programmmodulen auswählen zu lassen, wobei das dem Programmmodul zugeordnete Methodenprogramm jeweils in der Speichereinrichtung gespeichert ist oder speicherbar ist.

3. Laborautomat gemäß einem der vorherigen Ansprüche, wobei in Schritt (a) mehrere Abfragebereiche angezeigt werden, um mehrere Programmparameter abzufragen.

4. Laborautomat gemäß einem der vorherigen Ansprüche, wobei in Schritt (a) das Abfragen der Programmparameter in Form einer Liste erfolgt, indem eine Liste von mehreren Abfragebereichen vorgesehen ist, und wobei zumindest ein Abschnitt der Liste in dem ersten Displaybereich angezeigt wird.

5. Laborautomat gemäß Anspruch 4, wobei die Liste vom Benutzer durch Berühren des ersten Displaybereichs verschoben werden kann, insbesondere durch eine Geste gescrollt werden kann, um einen anderen Abschnitt der Liste im ersten Displaybereich anzuzeigen.

6. Laborautomat gemäß einem der vorherigen Ansprüche, wobei in Schritt (b) die erforderlichen Programmparameter über eine Anzahl N_{T} von Abfragebereichen ermittelt werden.

7. Laborautomat gemäß Anspruch 6, wobei jedem Abfragebereich eine Abfragenummer N zwischen, jeweils einschließlich, 1 und N_{T} zugeordnet ist, wobei diese Abfragenummer im ersten Displaybereich in oder neben dem Abfragebereich angezeigt wird.

8. Laborautomat gemäß einem der vorherigen Ansprüche, wobei in Schritt (c) die vom Benutzer eingegebenen Werte der Programmparameter mit einer Information über diesen Programmparameter angezeigt werden, insbesondere als Text- und oder Bilddarstellung, wobei diese Darstellung als "Scratch-Liste" bezeichnet wird.

9. Laborautomat gemäß Anspruch 7 und 8, wobei in der Scratch-Liste für den mindestens einen vom Benutzer eingegebenen Wert für einen Programmparameter die entsprechende Abfragenummer N angezeigt wird.

10. Laborautomat gemäß einem der vorherigen Ansprüche, wobei der mindestens eine Programmparameter aus der folgenden Menge von physikalischen Größen ausgewählt ist, die zur Behandlung einer Laborprobe mittels der Behandlungseinrichtung relevant sind: Probenanzahl, Verdünnungsfaktor, Zielvolumen, Position der Proben in einem Probengefäßhalter oder in einer Microtiterplatte, Probentemperatur, Zeitpunkte und/oder Zeitdifferenzen, Temperaturen oder Temperaturdifferenzen, Änderungsraten solcher Parameter, etc.

11. Verfahren zur programmgesteuerten Behandlung von mindestens einer Laborprobe mittels eines Laborautomaten gemäß Anspruch 1 durch ein Steuerprogramm des Laborautomaten.

12. Verwendung des Laborautomaten gemäß einem der Ansprüche 1 bis 10 oder des Verfahrens nach Anspruch 11 zur Durchführung einer Laboraufgabe zur Behandlung von Laborproben, wobei diese Laboraufgabe insbesondere aus der Gruppe von folgenden Aufgaben gewählt ist:
Nukleinsäureaufreinigung, insbesondere
• "MagSep Blood gDNA": Aufreinigung von genomischer DNA aus Vollblut, insbesondere unter Verwendung des Eppendorf ® MagSep Blood gDNA Kits;
• "MagSep Tissue gDNA": Aufreinigung von genomischer DNA aus lebendem Gewebe, insbesondere unter Verwendung des Eppendorf ® MagSep Tissue gDNA Kits;
• "MagSep Viral DNA/RNA": Aufreinigung von viraler RNA oder DNA aus zellfreien Körperflüssigkeiten, insbesondere unter Verwendung des Eppendorf ® MagSep Viral DNA/RNA Kits;
und PCR-Anwendungen, insbesondere
• "Compose Mastermix"; Erzeugen von einer oder mehrerer PCT Stammmischungen ("mastermixes") aus Vormischungen ("pre-mixes") oder einzelnen Bestandteilen, insbesondere Puffer, Polymerase, dNTPs, Primern, Markern, etc.); dabei wird insbesondere das Volumen jedes benötigten Bestandteils von der Steuereinrichtung berechnet, insbesondere mittels dem Programmmodul, das der Behandlung "Compose Mastermix" zugeordnet ist;
• "Normalize Concentrations"; dabei werden mindestens zwei DNA/RNA-Probe verdünnt, um in allen Proben dieselbe Konzentration zu erhalten; die gewünschten Konzentrationen können z.B. manuell vom Benutzer eingegeben werden oder aus einer Datei importiert werden;
• "Create Dilution Series"; dabei werden nacheinander eine oder mehrere DNA/RNA-Standard-Proben mit bekannter Konzentration verdünnt, um eine Kalibrationskurve zu erzeugen, die für die quantitative PCR verwendet werden kann;
• "Setup Reactions"; dabei werden Reaktionsabläufe erzeugt, indem mehrere oder viele Proben mit einer oder mehrerer Stammmischungen kombiniert werden; und
• optional Erzeugung von Reaktionen zur Replikation von DNA/RNA.

## Claims

1. Laboratory machine (1) for the program-controlled treatment of at least one laboratory sample (10), having:
• a treatment device (2) for the program-controlled treatment of the at least one laboratory sample (10), wherein the treatment is controlled by using a plurality of program parameters (8) that are chosen (9) at least in part by the user,
• an electronic control device (3) having
o at least one processor device (4) for data processing, wherein this data processing involves the execution of a control program (101) for controlling the laboratory machine,
∘ having at least one memory device (5) for storing data, particularly the control program and the program parameters,
• a user interface device (50) for the manual input of data by a user, and for the display of information, particularly of information that these data contain, wherein the user interface device has a display (50), particularly a touchscreen display,
• and this at least one control program (101) for controlling the laboratory machine, wherein the at least one control program contains instructions in order to perform the following steps:
(a) display of at least one query area in a first display area (51) of the display (50), wherein a query area has at least one information area and at least one input area associated with this at least one information area,
(b) querying of one or more program parameters (9) that are required for the program-controlled execution of the treatment by virtue of a piece of information for the at least one program parameter being displayed in the at least one information area and an input from the user, particularly a touch on the at least one input area, being captured in the at least one input area,
(c) in each case following input of at least one program parameter by the user: display of the at least one value that is input by the user for the at least one program parameter in an information area of the second display area (52) of the display (50),
wherein preferably, following the querying of these required program parameters (9), one, a plurality of or all values input by the user for these program parameters are displayed in this second display area,
(d) performance of the treatment by using the queried program parameters (9), **characterized in that**,
the laboratory machine comprises at least one program module (102), wherein a predetermined program module is used for controlling a predetermined laboratory task relating to the treatment of laboratory samples,
• wherein the treatment is controlled by using a selected program module with which the plurality of program parameters that are chosen at least in part by the user are associated,
• wherein the at least one processor device is used particularly for executing at least one program module and wherein the at least one memory device is used for storing the at least one program module,
• wherein the at least one control program contains instructions in order to execute steps (a), (b), (c) and (d) on the basis of the selected program module, wherein the program parameters to be queried in step (b) are associated with the selected program module,
• wherein the at least one processor device is used particularly for executing at least one method program that is used for controlling a predetermined laboratory task relating to the treatment of laboratory samples and wherein the at least one memory device is used for storing at least one method program,
• wherein the program parameters to be queried in step (b) are associated with the method program produced by using the selected program module,
• wherein the at least one control program contains instructions in order to execute step (c2) on the basis of the selected program module:
(c2) production of the method program according to this program module on the basis of the required program parameters and the program parameters input by the user, and storing of the method program in the memory device, wherein the method program can be edited by the user such that the method program is later changeable by the user.
• wherein in step (d) the treatment is performed by executing the method program.

2. Laboratory machine according to claim 1, wherein the control program is designed to allow the desired program module to be selected by the user from the number NP>1 of predetermined program modules via the user interface, wherein the method program associated with the program module is stored or can be stored in the memory device in each case.

3. Laboratory machine according to one of the preceding claims, wherein in step (a) a plurality of query areas are displayed in order to query a plurality of program parameters.

4. Laboratory machine according to one of the preceding claims, wherein in step (a) the program parameters are queried in the form of a list by virtue of a list containing a plurality of query areas being provided, and wherein at least one section of the list is displayed in the first display area.

5. Laboratory machine according to claim 4, wherein the list can be moved by the user by touching the first display area, particularly can be scrolled by a gesture, in order to display a different section of the list in the first display area.

6. Laboratory machine according to one of the preceding claims, wherein in step (b) the required program parameters are ascertained via a number N_{T} of query areas.

7. Laboratory machine according to claim 6, wherein each query area has an associated query number N between 1 and N_{T}, in each case inclusive, wherein this query number is displayed in the first display area in or next to the query area.

8. Laboratory machine according to one of the preceding claims, wherein in step (c) the values input by the user for the program parameters are displayed with a piece of information about these program parameters, particularly as a text and/or image presentation, wherein this representation is denoted a "Scratch-List".

9. Laboratory machine according to claims 7 and 8, wherein the relevant query number N is displayed in the scratch list for the at least one value that is input by the user for a program parameter.

10. Laboratory machine according to one of the preceding claims, wherein the at least one program parameter is selected from the following set of physical variables that are relevant for the treatment of a laboratory sample by means of the treatment device: number of samples, dilution factor, target volume, position of the samples in a sample vessel holder or in a microtitre plate, sample temperature, times and/or time differences, temperatures or temperature differences, rates of change of such parameters, etc.

11. Method for the program-controlled treatment of at least one laboratory sample by means of a laboratory machine according to claim 1 by a control program of the laboratory machine.

12. Use of the laboratory machine according to one of claims 1 to 10 or of the method according to Claim 11 for the performance of a laboratory task relating to the treatment of laboratory samples, wherein this laboratory task is chosen particularly from the group containing the following tasks:
nucleic acid purification, particularly
• "MagSep Blood gDNA": purification of genomic DNA from whole blood, particularly by using the Eppendorf ® MagSep Blood gDNA kit;
• "MagSep Tissue gDNA": purification of genomic DNA from living tissue, particularly by using the Eppendorf ® MagSep Tissue gDNA kit;
• "MagSep Viral DNA/RNA": purification of viral RNA or DNA from cell-free body fluids, particularly by using the Eppendorf ® MagSep Viral DNA/RNA kit;
and PCR applications, particularly
• "Compose Mastermix"; production of one or more PCT mastermixes from pre-mixes or individual constituents, particularly buffer, polymerase, dNTPs, primers, markers, etc.); in this case, particularly the volume of each required constituent is calculated by the control device, particularly by means of the program module that is associated with the "Compose Mastermix" treatment;
• "Normalize Concentrations"; in this case, at least two DNA/RNA samples are diluted in order to obtain the same concentration in all samples; the desired concentrations can be input manually by the user, for example, or imported from a file;
• "Create Dilution Series"; in this case, one or more DNA/RNA standard samples with a known concentration are diluted in succession in order to produce a calibration curve that can be used for the quantitative PCR;
• "Setup Reactions"; in this case, reaction processes are produced by virtue of a plurality of or many samples being combined with one or more mastermixes; and
• "Optionally, it is thus also possible to produce reactions for the replication of DNA/RNA.

## Revendications

1. Automate de laboratoire (1) pour le traitement commandé par programme d'au moins un échantillon de laboratoire (10), comprenant :
• un système de traitement (2) pour le traitement commandé par programme d'au moins un échantillon de laboratoire (10), le traitement étant commandé en utilisant plusieurs paramètres de programme (8) qui sont choisis (9) au moins partiellement par l'utilisateur,
• un système de commande électronique (3), comportant
∘ au moins un système de processeur (4) pour le traitement des données, ledit traitement des données comprenant l'exécution d'un programme de commande (101) pour la commande de l'automate de laboratoire,
∘ au moins un système de stockage (5) pour le stockage de données, en particulier du programme de commande et des paramètres de programme,
• un système d'interface utilisateur (50) pour la saisie manuelle de données par un utilisateur, et pour l'affichage d'informations, en particulier d'informations contenues dans ces données, le système d'interface utilisateur présentant un affichage (50), en particulier un affichage à écran tactile,
• et ledit au moins un programme de commande (101) pour la commande de l'automate de laboratoire, le au moins un programme de commande contenant des instructions pour exécuter les étapes suivantes :
(a) affichage d'au moins une zone de requête dans une première zone d'affichage (51) de l'affichage (50), une zone de requête présentant au moins une zone d'informations et au moins une zone de saisie affectée à ladite au moins une zone d'informations,
(b) requête de plusieurs paramètres de programme (9) nécessaires à l'exécution commandée par programme du traitement grâce à l'affichage d'une information concernant les paramètres de programme dans la au moins une zone d'informations et à l'enregistrement d'une saisie de l'utilisateur, en particulier d'un contact de la au moins une zone de saisie, dans la au moins une zone de saisie,
(c) respectivement après la saisie d'au moins un paramètre de programme par l'utilisateur : affichage de la au moins une valeur du au moins un paramètre de programme, saisie par l'utilisateur, dans une zone d'informations de la deuxième zone d'affichage (52) de l'affichage (50),
dans lequel plusieurs ou toutes les valeurs de ces paramètres de programme saisies par l'utilisateur sont affichées dans ladite deuxième zone d'affichage, après la requête desdits paramètres de programme (9) nécessaires,
(d) réalisation du traitement en utilisant les paramètres du programme (9) requis,
**caractérisé en ce que**
l'automate de laboratoire présente au moins un module de programme (102), dans lequel un module de programme prédéfini sert à la commande d'une tâche de laboratoire prédéfinie pour le traitement d'échantillons de laboratoire,
• dans lequel le traitement est commandé en utilisant un module de programme choisi, auquel sont affectés les multiples paramètres de programme, qui sont choisis au moins partiellement par l'utilisateur,
• dans lequel le au moins un système de processeur sert en particulier à l'exécution d'au moins un module de programme et dans lequel le au moins un système de stockage sert au stockage d'au moins un module de programme,
• dans lequel le au moins un programme de commande contient des instructions destinées à exécuter les étapes (a), (b), (c) et (d) en fonction du module de programme choisi, les paramètres de programme à requérir à l'étape (b) étant affectés au module de programme choisi,
• dans lequel le au moins un système de processeur sert notamment à l'exécution d'au moins un programme de méthodes destiné à commander ladite tâche de laboratoire prédéfinie pour le traitement d'échantillons de laboratoire et dans lequel le au moins un système de stockage sert à stocker au moins un programme de méthodes,
• dans lequel les paramètres de programme à requérir à l'étape (b) sont affectés au programme de méthodes généré en utilisant le module de programme choisi,
• dans lequel le au moins un programme de commande contient des instructions pour exécuter l'étape (c2) :
(c2) exécution du programme de méthodes en utilisant ledit module de programme en fonction des paramètres de programmes nécessaires et les paramètres de programme saisis par l'utilisateur, et stockage du programme de méthodes dans le système de stockage, le programme de méthodes étant éditable par l'utilisateur de telle sorte que le programme de méthodes soit modifiable ultérieurement par l'utilisateur,
• dans lequel la réalisation du traitement se fait à l'étape (d) en exécutant le programme de méthodes.

2. Automate de laboratoire selon la revendication 1, dans lequel le programme de commande est conçu pour permettre de sélectionner le module de programme voulu par l'utilisateur par le biais de l'interface utilisateur à partir du nombre NP>1 de modules de programme prédéfinis, dans lequel le programme de méthodes affecté au module de programme est stocké ou stockable respectivement dans le système de stockage.

3. Automate de laboratoire selon l'une des revendications précédentes, dans lequel plusieurs zones de requête sont affichées à l'étape (a) pour requérir plusieurs paramètres de programme.

4. Automate de laboratoire selon l'une des revendications précédentes, dans lequel la requête des paramètres de programme s'effectue sous la forme d'une liste à l'étape (a) grâce à la prévision d'une liste de plusieurs zones de requête, et dans lequel au moins une section de la liste est affichée dans la première zone d'affichage.

5. Automate de laboratoire selon la revendication 4, dans lequel l'utilisateur peut faire défiler la liste en touchant la première zone d'affichage, notamment la faire dérouler par un geste, pour afficher une autre section de la liste dans la première zone d'affichage.

6. Automate de laboratoire selon l'une des revendications précédentes, dans lequel les paramètres de programme nécessaires sont déterminés à l'étape (b) par le biais d'un nombre N_{T} de zones de requête.

7. Automate de laboratoire selon la revendication 6, dans lequel un numéro de requête N entre 1 et N_{T}, respectivement inclus, est affecté à chaque zone de requête, ledit numéro de requête étant affiché dans la première zone d'affichage dans ou à côté de la zone de requête.

8. Automate de laboratoire selon l'une des revendications précédentes, dans lequel les valeurs des paramètres de programme saisies par l'utilisateur sont affichées à l'étape (c) avec une information concernant ledit paramètre de programme, en particulier sous la forme de représentation textuelle ou graphique, ladite représentation étant appelée « liste scratch ».

9. Automate de laboratoire selon la revendication 7 et 8, dans lequel le numéro de requête correspondant N est affiché dans la liste scratch pour la au moins une valeur saisie par l'utilisateur pour un paramètre de programme.

10. Automate de laboratoire selon l'une des revendications précédentes, dans lequel le au moins un paramètre de programme est choisi à partir de la quantité suivante de grandeurs physiques qui sont pertinentes pour le traitement d'un échantillon de laboratoire au moyen du système de traitement : nombre d'échantillons, coefficient de dilution, volume cible, position des échantillons dans un support pour récipients à échantillons ou dans une plaque de micro-titrage, température des échantillons, moments et/ou différentiels de temps, températures ou différentiels de températures, taux de variation de ces paramètres, etc.

11. Procédé pour le traitement commandé par un programme d'au moins un échantillon de laboratoire au moyen d'un automate de laboratoire selon la revendication 1 par un programme de commande de l'automate de laboratoire.

12. Utilisation de l'automate de laboratoire selon l'une des revendications 1 à 10 ou du procédé selon la revendication 11 pour la réalisation d'une tâche de laboratoire destinée au traitement d'échantillons de laboratoire, ladite tâche de laboratoire étant choisie notamment dans le groupe des tâches suivantes :
purification d'acides nucléiques, en particulier
• « MagSep Blood gDNA » : purification d'ADN génomique à partir de sang entier, en particulier en utilisant le kit MagSep Blood gDNA d'Eppendorf® ;
• « MagSep Tissue gDNA » : purification d'ADN génomique à partir de tissu vivant, en particulier en utilisant le kit MagSep Tissue gDNA d'Eppendorf® ;
• « MagSep Viral DNA/RNA » : purification d'ADN ou d'ARN viral à partir de fluides corporels acellulaires, en particulier en utilisant le kit MagSep Viral DNA/RNA d'Eppendorf® ;
et applications PCR, en particulier
• « Compose Mastermix » ; production d'un ou de plusieurs mélanges mères PCT (« mastermixes ») à partir de pré-mélanges (« pre-mixes ») ou de composants individuels, en particulier tampon, polymérase, dNTP, amorces, marqueurs, etc.) ; le volume de chaque composant nécessaire est ici notamment calculé par le système de commande, en particulier au moyen du module de programme, qui est affecté au traitement « Compose Mastermix » ;
• « Normalize Concentrations » ; au moins deux échantillons d'ADN/ARN sont ici dilués pour maintenir la même concentration dans tous les échantillons ; les concentrations voulues peuvent par exemple être saisies manuellement par l'utilisateur ou importées à partir d'un fichier ;
• « Create Dilution Sériés » ; un ou plusieurs échantillons standards d'ADN/ARN de concentration connue sont ici dilués l'un après l'autre pour générer une courbe de calibration pouvant être utilisée pour la PCR quantitative ;
• « Setup Reactions » ; des processus de réaction sont ici générés en combinant plusieurs ou de nombreux échantillons avec un ou plusieurs mélanges mères ; et
• génération optionnelle de réactions pour la réplication de l'ADN/ARN.
